(19) Europäisches Patentamt
European Patent Office
Office européen des brevets

(11) **EP 4 290 187 A2**

(12) **EUROPEAN PATENT APPLICATION**

(43) Date of publication:
**13.12.2023  Bulletin 2023/50**

(51) International Patent Classification (IPC):
**G01C 21/36** (2006.01)    **G06T 19/00** (2011.01)
**G06V 20/56** (2022.01)    **G06V 20/20** (2022.01)

(21) Application number: **23175934.1**

(22) Date of filing: **30.05.2023**

(52) Cooperative Patent Classification (CPC):
**G01C 21/3647; G01C 21/365; G06T 19/006;
G06V 20/20; G06V 20/56**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022  KR 20220070770
19.10.2022  PCT/KR2022/095145**

(71) Applicant: **LG Electronics Inc.
Yeongdeungpo-gu
Seoul 07336 (KR)**

(72) Inventors:
• **CHOI, Byeongjun
Seoul (KR)**
• **CHAE, Jisuk
Seoul (KR)**
• **SON, Junghoon
Seoul (KR)**
• **KIM, Ilwan
Seoul (KR)**
• **PARK, Jongtae
Seoul (KR)**

(74) Representative: **Vossius & Partner
Patentanwälte Rechtsanwälte mbB
Siebertstraße 3
81675 München (DE)**

(54) **AR DISPLAY DEVICE FOR VEHICLE AND METHOD FOR OPERATING SAME**

(57)    An Augmented Reality (AR) display device interoperating with a vehicle and a method for operating the same are disclosed. An AR display device interoperating with a vehicle according to the present disclosure can display a current driving state of the vehicle while the vehicle is traveling and display a guide related to a predicted next driving situation on a navigation screen using an AR graphic interface. At this time, the AR display device can guide a predicted driving situation in advance by separating and locating a part of the AR graphic interface at a predetermined distance ahead of a predicted location, and allow the separated part of the AR graphic interface to move as the vehicle travels so as to display a guide trajectory along which the vehicle is supposed to travel. This can provide more intuitive and realistic AR guidance to the vehicle.

FIG. 11

ACTIVATE APPLICATION — S10

RENDER AR GRAPHIC INTERFACE, INCLUDING FIRST AR OBJECT DISPLAYING DRIVING STATE OF VEHICLE AND SECOND AR OBJECT DISPLAYING GUIDE FOR DRIVING SITUATION OF VEHICLE, TO OVERLAP FRONT IMAGE OF VEHICLE, ON THE BASIS OF MAP DATA — S20

DISPLAY NAVIGATION SCREEN INCLUDING FRONT IMAGE OVERLAPPED BY AR GRAPHIC INTERFACE — S30

1100

EP 4 290 187 A2

**Description**

The present disclosure relates to an Augmented Reality (AR) display device interoperating with a vehicle, a method for operating the same, and more specifically, to an AR display device capable of displaying an AR guide for a next driving situation, which is predicted while the vehicle is traveling, in advance in front of the vehicle, and a method for operating the same.

For safety and convenience of a user who uses the vehicle, various sensors and devices are disposed at the vehicle, and functions of the vehicle are diversified. The functions of the vehicle may be divided into a convenience function for promoting driver's convenience, and a safety function for enhancing safety of the driver and/or pedestrians.

First, the convenience function has a development motive associated with the driver's convenience, such as providing infotainment (information + entertainment) to the vehicle, supporting a partially autonomous driving function, or helping the driver ensuring a field of vision at night or at a blind spot. For example, the convenience functions may include various functions, such as an active cruise control (ACC), a smart parking assist system (SPAS), a night vision (NV), a head up display (HUD), an around view monitor (AVM), an adaptive headlight system (AHS), and the like.

The safety function of the vehicle is a technique of ensuring safeties of the driver and/or pedestrians, and may include various functions, such as a lane departure warning system (LDWS), a lane keeping assist system (LKAS), an autonomous emergency braking (AEB), and the like.

Recently, Augmented Reality (AR) that outputs a graphic object through a windshield of a vehicle or a Head Up Display (HUD) or additionally outputs a graphic object to the real world by outputting the graphic object to an image captured by a camera is being actively developed. In particular, the development of technologies for guiding a route (or path) to a driver by utilizing an augmented reality (AR) technology is further increasing.

Meanwhile, in the past, even if such an augmented reality (AR) technology was applied to route guidance according to an AR driving mode, existing driving guidance was simply displayed in an AR form. For example, driving direction change guidance was merely output as an AR image at a fixed position.

Accordingly, it was difficult to distinguish the AR image from other AR features of the AR driving mode, which caused a limit to providing intuitive route guidance. In addition, a driver who was inexperienced in driving was limited to driving a vehicle accurately according to the guidance. This is the same even if a remaining distance value is displayed together with the driving direction change guidance. Therefore, research is needed to perform a more intuitive and complete AR driving mode.

The present disclosure is directed to solving the above-mentioned problems and other drawbacks.

According to some embodiments, an aspect of the present disclosure is to provide an AR display device capable of performing a more intuitive and developed AR driving mode, and a method for operating the same.

According to some embodiments of the present disclosure, another aspect of the present disclosure is to provide an AR display device capable of outputting a next driving situation predicted at a current location of a vehicle for intuitive recognition of the next driving situation and convenient and safe driving.

According to some embodiments, still another aspect of the present disclosure is to provide an AR display device capable of dynamically changing a AR interface, such as joining, separating, or transforming one or more objects in the AR interface, to provide various information of the predicted next driving situation as well as a current driving state of the vehicle, and a method for operating the same.

According to some embodiments, still another aspect of the present disclosure is to provide an AR display device capable of outputting more harmonious and expanded UXs to provide navigation information or POI information related to driving in an AR driving mode as well as a predicted next driving situation, and a method for operating the same.

To this end, an AR display device interoperating with a vehicle according to the present disclosure can display a current driving state of the vehicle while the vehicle is traveling and display a guide related to a predicted next driving situation on a navigation screen using an AR graphic interface.

At this time, the AR display device can guide a predicted driving situation in advance by separating and locating an object of the AR graphic interface at a predetermined distance ahead of a predicted location.

The separated AR object can change in real time according to a current location of the vehicle and a road shape. The separated AR object may also be displayed by reflecting not only the predicted driving situation but also information related to the navigation system, POIs around the vehicle, and the like.

When the corresponding situation ends, the separated AR object can be joined back to a remaining part of the AR graphic interface. In other words, the separated AR object can be combined, merged or put together close to another AR object in the AR graphic interface. In addition, the AR graphic interface may be separated into AR objects whenever a particular driving situation is predicted while the vehicle is traveling, and then joined when that particular driving situation ends. This separation and joining may be repeatedly performed.

Specifically, an AR display device according to the present disclosure includes a communication module configured to receive image data including a front image of a vehicle , location data including a current location of the vehicle, and map data of the vehicle including a map relating to the current location of the vehicle, a processor configured to activate a preset application to render an AR graphic interface overlapping the front image, the AR graphic interface including a first AR object indicating a current driving state of the vehicle and a second AR object indicating a guide for driving based on the current location of the vehicle and the map data, and a display configured to display a navigation screen including the front image overlapped by the AR graphic interface according to the rendering. The processor is further configured to render the AR graphic interface in the manner of selectively separating the second AR object from the first AR object or joining the second AR object to the first AR object on the navigation screen. This separating or joining may be performed alternatively.

The processor varies the AR graphic interface based on data corresponding to a next driving situation of the vehicle predicted based on the map data and the current location of the vehicle updated.

In an embodiment, the AR graphic interface may be varied at a second location that is a predetermined distance ahead of a first location where the next driving situation of the vehicle starts, or that is a location that the vehicle passes at a predetermined time point prior to reaching the first location.

In an embodiment, any one of a first condition and a second condition may be determined based on at least one of the map data, the current location, and navigation information of the vehicle. The processor may render the AR graphic interface by joining the first and second AR objects together on the navigation screen when the first condition is satisfied, and by separating the first and second AR objects from each other on the navigation screen when the second condition is satisfied. The separated second AR object indicates the next driving situation.

In an embodiment, the processor may render, under the first condition, a panel region including the AR objects associated with driving information of the vehicle to overlap a predetermined region of the front image, and update, under the second condition, the panel region to be hidden or inclined while the separated second AR object indicates the next driving situation.

Based on these features, a driving guide by the AR graphic interface can be displayed more harmoniously with a current driving state of the vehicle, efficiency of an AR driving mode can be improved, and driving stability and convenience can be improved.

In an embodiment, the data corresponding to the next driving situation of the vehicle may include road shape information that is predicted based on at least one of the map data and sensing data of the vehicle and the current location of the vehicle. The processor may update the AR graphic interface to reflect a change corresponding to the road shape information.

For example, one or more AR objects constituting the AR graphic interface may be rotated around at least one axis of yawing, rolling and pitching axes so that a curvature or slope of a road is reflected in the AR graphic interface.

In an embodiment, the AR graphic interface may be rendered to rotate in a first direction based on a vehicle wheel angle corresponding to the road shape information. The processor may update the AR graphic interface in a manner that a degree of distortion or a difference of rotation angles between first and second AR objects constituting the AR graphic interface increases as the vehicle wheel angle increases.

In an embodiment, the AR graphic interface may be rendered to rotate in a second direction based on a slope angle corresponding to the road shape information. The processor may update the AR graphic interface in a manner that a direction and degree of a rotation angle of the second AR object is changed relative to the first AR object according to a direction and degree of the slope angle.

In the present disclosure, the next driving situation of the vehicle may be a state of the vehicle in which a route to a destination is searched or a setting value for a navigation system is inputted.

In an embodiment, the processor may render the second AR object to be separated from the first AR object and rotated relative to the first AR object while the first AR object shows the current driving state of the vehicle, in response to recognition of a route search state of the vehicle as the next driving situation of the vehicle, and update the AR graphic interface in a manner that the separated first and second AR objects are joined together, in response to an end of the route search state of the vehicle.

In an embodiment, the processor may change an image of the AR graphic interface to include a notification of a driving warning situation of the vehicle in which a problem associated with the driving of the vehicle is recognized or anticipated. The driving warning situation is recognized or anticipated based on the sensing data and navigation information of the vehicle.

Here, the driving warning situation may include a situation in which the vehicle exceeds a vehicle speed limit or is traveling at speed very close to the vehicle speed limit, and a situation with a possibility of collision between the vehicle and another vehicle or object.

In an embodiment, the processor may change at least one of color, shape, blinking, and highlighting of the AR graphic interface when speeding of the vehicle is recognized or anticipated as the driving warning situation. Accordingly, a driver can intuitively recognize the warning situation.

In an embodiment, when turning is determined as the next driving situation of the vehicle based on the map data and current location of the vehicle, preferably further based on the sensing data of the vehicle, the processor may update the AR graphic interface such that the second AR object is separated to indicate at least one of direction and route of the turning at the second location while the first AR object indicates a current driving direction of the vehicle.

Accordingly, the vehicle can perform the turning safely and easily just by moving along the guide of the second AR object.

In an embodiment, the processor may keep displaying the second AR object separated from the first AR object to guide a next route for the vehicle to travel, in response to the current location of the vehicle approaching the second location within a predetermined distance, and update the AR graphic interface by joining the first and second AR objects together, in response to the current location of the vehicle passing the second location.

At this time, a time point at which the second AR object is separated and a time point at which a next route is additionally guided while maintaining the separated state of the second AR object may be important. The guided route may be calibrated such that the second AR object accurately matches one or more real objects in the navigation screen, so that the driver can easily follow the guided route.

In an embodiment, the processor may calculate a route corresponding to each exit point of a rotary intersection when the rotary section is recognized or anticipated as the next driving situation of the vehicle based on the map data and navigation information of the vehicle, and update the AR graphic interface such that the second AR object is divided into plurality at the second location to display the calculated route at a third location corresponding to each exit point.

In an embodiment, the processor may receive destination information from navigation information of the vehicle through the communication module, and update the AR graphic interface such that the second AR object is separated and points to the first location, when the current location of the vehicle reaches the second location slightly ahead of the first location.

In an embodiment, the separated second AR object may move to the first location and change in image to include remaining distance information from the current location of the vehicle up to the first location.

Accordingly, the driver can more accurately check the location of the destination. Even after the vehicle actually arrives at the first location corresponding to the destination information, the display of the AR graphic interface may continue to be displayed. Accordingly, a driver who is not familiar with the destination can avoid an embarrassing situation which may occur when a driving guide disappears at the moment of arriving at the destination in the conventional route guidance.

In an embodiment, the processor may update the AR graphic interface to join the first and second AR objects together until a next driving situation of the vehicle is newly detected, after the current location of the vehicle having passed the first location.

In an embodiment, the processor may separate and locate the second AR object of the AR graphic interface at the second position to guide a U-turn location when a U-turn section is recognized or anticipated as the next driving situation of the vehicle based on the map data and navigation information of the vehicle, and update the AR graphic interface so that the separated second AR object indicates a driving state of the vehicle in the U-turn section.

Alternatively, the above-identified functions performed by the processor of the AR display device may be performed by one or more processors located outside the AR display device.

According to another embodiment, there is provided a method of presenting an augmented reality, AR, interface on an AR display device for a vehicle, which comprises: receiving image data including a front image of the vehicle; receiving location data including a current location of the vehicle; receiving map data relating to the current location of the vehicle; activating a preset application to render an AR graphic interface to overlap the front image, the AR graphic interface including a first AR object indicating a current driving state of the vehicle and a second AR object indicating a guide for driving at least on the basis of the current location of the vehicle and the map data; and generating signals for displaying a navigation screen including the front image overlapped by the AR graphic interface according to the rendering. The rendering of the AR graphic interface comprises selectively separating the second AR object from the first AR object or joining the second AR object to the first AR object on the navigation screen. This separating or joining may be performed alternatively.

Hereinafter, effects of an AR display device of a vehicle and a method of operating the same according to the present disclosure will be described.

According to an AR display device and its operating method according to some embodiments of the present disclosure, an augmented reality navigation screen can be provided based on a calibrated front image without separate setting, and a more intuitive and realistic AR guide can be provided by rendering AR objects to provide a guide for a predicted driving situation shown on a current navigation screen as well as a current location of the vehicle. Also, an AR graphic interface can be used to provide information related to a road shape, which can assist steering control of the vehicle.

According to an AR display device and its operating method according to some embodiments of the present disclosure, a current driving state and a next driving situation can be guided at the same time by selectively separating or joining one or more objects in a AR graphic interface, and a separated AR object can provide a driving guide while moving as the vehicle travels, instead of being displayed at a fixed location, which can allow the vehicle to travel by following the driving guide more easily, safely, and conveniently.

According to an AR display device and its operating method according to some embodiments of the present disclosure, an AR graphic interface that reflects not only a predicted driving situation but also navigation state information, setting information, and surrounding POI information can be provided, such that a user can experience a more harmonious and expanded AR driving mode.

FIG. 1 is a diagram illustrating an example of a vehicle in accordance with an embodiment of the present disclosure.
FIG. 2 is a diagram illustrating the vehicle in accordance with the embodiment at various angles.
FIGS. 3 and 4 are diagrams illustrating an inside of the vehicle in accordance with the embodiment.
FIGS. 5 and 6 are reference views illustrating various objects in relation to traveling of the vehicle in accordance with the embodiment.
FIG. 7 is a block diagram illustrating a vehicle and an AR display device in accordance with an embodiment.
FIG. 8 is a detailed block diagram related to a processor of the AR display device in accordance with the embodiment.
FIG. 9 is a diagram referenced to describe a navigation screen in accordance with an embodiment, and FIG. 10 is a diagram referenced to describe an operation of generating the navigation screen of FIG. 9.
FIG. 11 is a flowchart referenced to describe a method for displaying an AR graphic interface on the navigation screen in accordance with the embodiment.
FIGS. 12A and 12B are diagrams illustrating an example of the AR graphic interface according to the embodiment of the present disclosure, which are referenced to describe separation and combination of first and second AR objects.
FIGS. 13A, 13B, 14A, 14B, 14C, 15A, 15B, 16A, 16B, 16C, 16D, 17A, 17B, 17C, 18, 19A, 19B, 20, 21, 22, 23A, 23B, 24, and 27 are diagrams illustrating various examples related to rendering the AR graphic interface according to the embodiment on the navigation screen by varying the AR graphic interface differently for each predicted driving situation.
FIGS. 25A, 25B, and 26 are exemplary diagrams related to additionally providing surrounding information through an intuitive AR UX when the AR graphic interface according to the embodiment is output on the navigation screen.

Description will now be given in detail according to exemplary implementations disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an implementation of the present disclosure may be understood as a conception including cars, motorcycles and the like. Hereinafter, the vehicle will be described based on a car.

The vehicle according to the implementation of the present disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

The term "system" disclosed herein may include at least one of a server device and a cloud device, but is not limited thereto. For example, a system may include one or more server devices. As another example, a system may include one or more cloud devices. As still another example, a system may be operated by including a server device and a cloud device together.

In the present disclosure, the term "user terminal" or "user client" refers to a computing device and/or system, such as a user terminal, or a user herself/himself that communicates with a vehicle (or an electrical component, device/system, etc. provided in the vehicle) and an AR display device/system.

The term "map information" disclosed herein means information that includes an image captured through a vision sensor such as a camera, 2D map information, 3D map information, digital twin 3D map, and map information on a real/virtual space.

The term "Point of Interest (POI) information" disclosed herein is a point of interest selected based on the map information, and may include pre-registered POI information (POI stored in a map of a cloud server), user-set POI information (e.g., home, school, company, etc.), driving-related POI information (e.g., destination, via point, gas station, rest area, parking lot, etc.), and top search POI information (e.g., POI with lots of recent clicks/visits, hot places, etc.). This POI information may be updated in real time based on a current location of the vehicle.

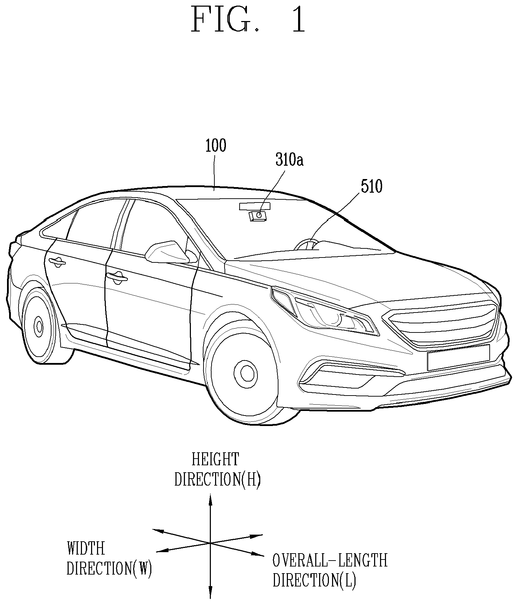

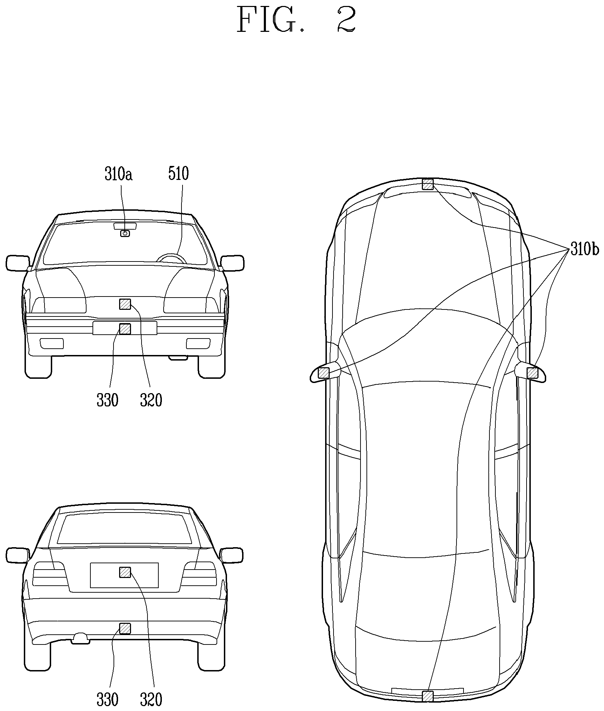

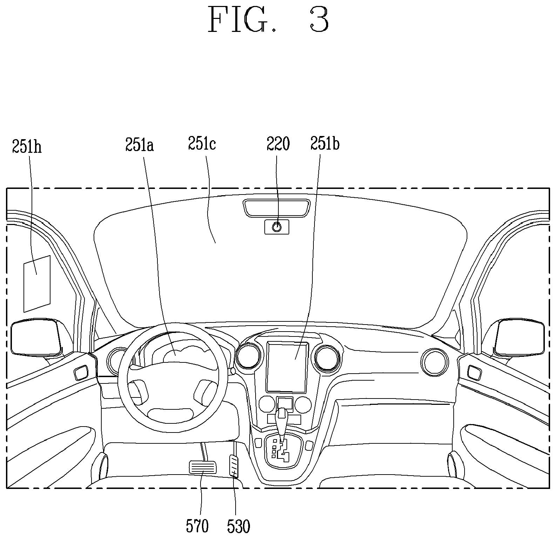

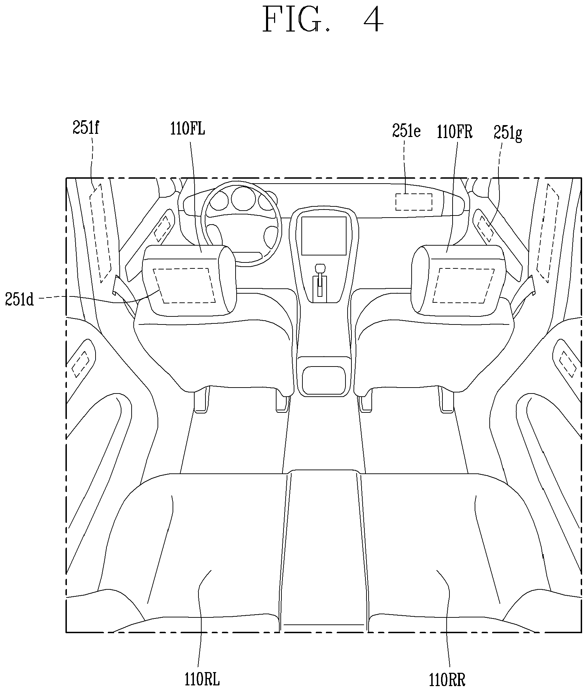

FIGS. 1 and 2 are diagrams illustrating the outside of a vehicle in accordance with the embodiment, and FIGS. 3 and 4 are diagrams illustrating the inside of the vehicle.

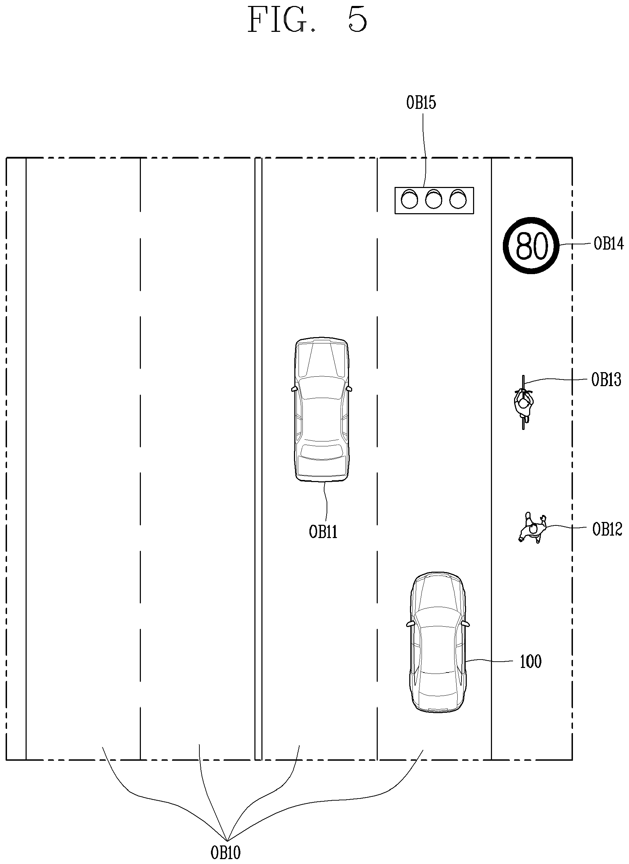

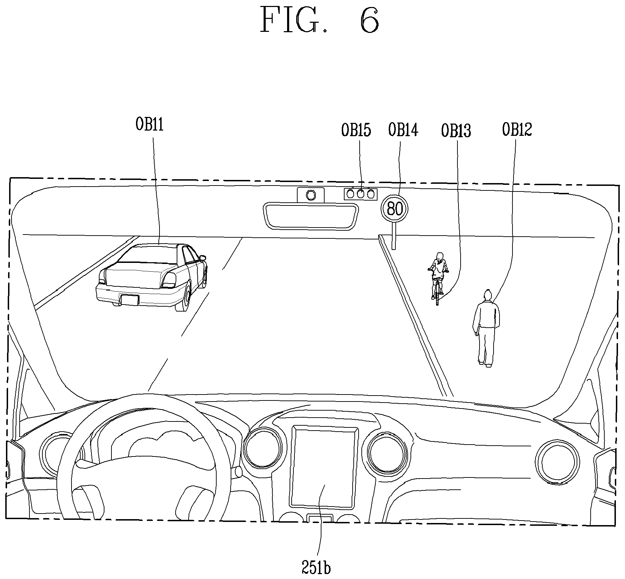

FIGS. 5 and 6 are reference views illustrating various objects in relation to traveling of the vehicle in accordance with the embodiment.

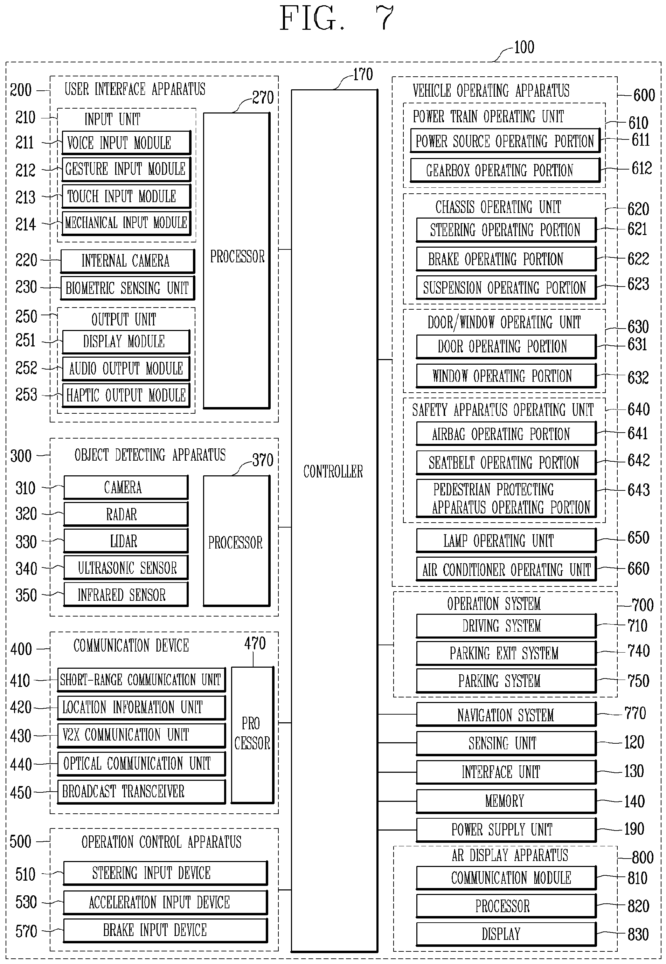

FIG. 7 is a block diagram illustrating the vehicle in accordance with the embodiment.

As illustrated in FIG. 1 to 7, a vehicle 100 may include wheels turning by a driving force, and a steering apparatus 510 for adjusting a driving (ongoing, moving) direction of the vehicle 100.

The vehicle 100 may be an autonomous vehicle. The vehicle 100 may be switched into an autonomous mode or a manual mode based on a user input. For example, the vehicle 100 may be converted from the manual mode into the autonomous mode or from the autonomous mode into the manual mode based on a user input received through a user interface apparatus 200 (hereinafter, referred to as 'user terminal').

The vehicle 100 may be switched into the autonomous mode or the manual mode based on driving environment information. The driving environment information may be generated based on object information provided from an object detecting apparatus 300. For example, the vehicle 100 may be switched from the manual mode into the autonomous mode or from the autonomous module into the manual mode based on driving environment information generated in the object detecting apparatus 300. In an example, the vehicle 100 may be switched from the manual mode into the autonomous mode or from the autonomous mode into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700. For example, the autonomous vehicle 100 may be driven based on information, data or signals generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100.

As illustrated in FIG. 7, the vehicle 100 may include a user interface apparatus (hereinafter, referred to as 'user terminal') 200, an object detecting apparatus 300, a communication apparatus 400, a driving control apparatus 500, a vehicle operating apparatus 600, an operation system 700, a navigation system 770, a sensing unit 120, an interface unit 130, a memory 140, a controller 170 and a power supply unit 190.

According to embodiments, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 100 may implement user interfaces (UIs) or user experiences (UXs) through the user interface apparatus (hereinafter, referred to as 'user terminal') 200.

The user interface apparatus 200 may include an input unit 210, an internal camera 220, a biometric sensing unit 230, an output unit 250, and a processor 270. According to embodiments, the user interface apparatus 200 may include more components in addition to components to be explained in this specification or may not include some of those components to be explained in this specification.

The input unit 210 may allow the user to input information. Data collected in the input unit 210 may be analyzed by the processor 270 and processed as a user's control command.

The input unit 210 may be disposed inside the vehicle. For example, the input unit 210 may be disposed on one region of a steering wheel, one region of an instrument panel, one region of a seat, one region of each pillar, one region of a door, one region of a center console, one region of a headlining, one region of a sun visor, one region of a windshield, one region of a window, or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170. The audio input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input. According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input. According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel and a jog switch. An electric signal generated by the mechanical input module 214 may be provided to the processor 270 or the controller 170. The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing unit 230 may include a sensor for detecting the user's biometric information and acquire fingerprint information and heart rate information regarding the user using the sensor. The biometric information may be used for user authentication.

The output unit 250 may generate an output related to a visual, audible or tactile signal. The output unit 250 may include at least one of a display module 251, an audio output module 252 and a haptic output module 253.

The display module 251 may output graphic objects corresponding to various types of information. The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window. The transparent display may have a predetermined degree of transparency and output a predetermined screen thereon. The transparent display may include at least one of a thin film electroluminescent (TFEL), a transparent OLED, a transparent LCD, a transmissive transparent display, and a transparent LED display. The transparent display may have adjustable transparency.

Meanwhile, the user interface apparatus 200 may include a plurality of display modules 251a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 may convert an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user may recognize such output.

The processor (hereinafter, referred to as 'controller') 270 may control an overall operation of each unit of the user interface apparatus 200. According to an embodiment, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle. The user interface apparatus 200 may operate according to the control of the controller 170.

The object detecting apparatus 300 is an apparatus for detecting an object located at outside of the vehicle 100. The object may be a variety of objects associated with driving (operation) of the vehicle 100. Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a terrain, an animal, and the like.

The lane OB10 may be a driving lane, a lane next to the driving lane or a lane on which another vehicle comes in an opposite direction to the vehicle 100. The lanes OB10 may be a concept including left and right lines forming a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a vehicle (transportation facility) that is located near the vehicle 100 and moves using two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge, and the like.

The terrain may include a mountain, a hill, and the like.

Meanwhile, objects may be classified into a moving object and a fixed object. For example, the moving object may be a concept including another vehicle and a pedestrian. The fixed object may be, for example, a traffic signal, a road, or a structure.

The object detecting apparatus 300 may include a camera 310, a radar 320, a LiDAR 330, an ultrasonic sensor 340, an infrared sensor 350 and at least one processor, such as the processor 370.

According to an embodiment, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk, or a tail gate.

For example, the camera 310 may be disposed adjacent to at least one of side windows within the vehicle to acquire a side image of the vehicle. Or, the camera 310 may be disposed adjacent to a side mirror, a fender, or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor 370 may detect an object based on reflected infrared light which emitted infrared light is reflected from the object, and track the object. The processor 370 may execute operations, such as a calculation of a distance from the object, a calculation of a relative speed with the object and the like, based on the infrared light.

According to an embodiment, the object detecting apparatus 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal, or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications may include BLUETOOTH, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 may be a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal, and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display device for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 is preferably configured in the form of a wheel allowing a steering input in a rotating manner. According to some embodiments, the steering input device may also be configured in a shape of a touch screen, a touch pad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. According to some embodiments, the acceleration input device or the brake input device may also be configured in a shape of a touch screen, a touch pad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to an embodiment, the communication apparatus 600 may further include other components in addition to the components described, or may not include some of the components described.

In some examples, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox. The gearbox operating portion 612 may adjust a state of the gearbox. The gearbox operating portion 612 may change the state of the gearbox into drive (forward) (D), reverse (R), neutral (N) or parking (P).

Meanwhile, when an engine is the power source, the gearbox operating portion 612 may adjust a locked state of a gear in the drive (D) state.

The chassis operating unit 620 may control an operation of a chassis device. The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road. Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protection apparatus operating portion 643 may perform an electronic control for a hood lift and a pedestrian airbag. For example, the pedestrian protection apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

According to an embodiment, the operation system 700 may further include other components in addition to the components described, or may not include some of the components described.

Meanwhile, the operation system 700 may include a processor. Each unit of the operation system 700 may individually include at least one processor.

According to embodiments, the operation system may be a sub concept of the controller 170 when it is implemented in a software configuration.

Meanwhile, according to embodiment, the operation system 700 may be a concept including at least one of the user interface apparatus 200, the object detecting apparatus 300, the communication apparatus 400, the vehicle operating apparatus 600 and the controller 170.

The driving system 710 may perform driving of the vehicle 100.

The driving system 710 may receive navigation information from a navigation system 770, transmit a control signal to the vehicle operating apparatus 600, and perform driving of the vehicle 100. The driving system 710 may receive object information from the object detecting apparatus 300, transmit a control signal to the vehicle operating apparatus 600 and perform driving of the vehicle 100. The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot. The parking exit system 740 may receive object information from the object detecting apparatus 300, transmit a control signal to the vehicle operating apparatus 600 and perform the exit of the vehicle 100 from the parking lot. The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100. The parking system 750 may receive object information from the object detecting apparatus 300, transmit a control signal to the vehicle operating apparatus 600 and park the vehicle 100. The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

According to embodiments, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs for processing or controlling the controller 170.

According to embodiments, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, an AR display device 800 according to the present disclosure may display an AR graphic interface indicating a driving state of the vehicle 100 on a front (or forward) image of the vehicle 100 (or a windshield of the vehicle) in real time through AR merging, on the basis of navigation information of the vehicle 100 and data received from an AR camera.

To this end, the AR display device 800 includes a communication module 810 for communicating with other devices/systems, servers, and vehicles, a processor 820 for controlling overall operations of the AR display device 800, and a display 830 for displaying a navigation screen including a front image upon which an AR graphic interface is rendered.

The communication module 810 may receive image data including a front image of the vehicle, location data including a current location of the vehicle, and map data of the vehicle including a map relating to the current location of the vehicle.

The term 'front image' or driving image' disclosed herein refers to an image captured through a camera sensor (or including smart glass having such a function) in a direction in which the vehicle is moving. This term may also refer to an image reflected on an LCD screen through the camera sensor, a real space image shown on a windshield/dashboard and/or a digital twin 3D image.

The term 'navigation screen including the front image (driving image)' disclosed herein may mean that a front image implemented in the form of one of a front image captured through a camera of a vehicle, an image reflected on an LCD screen, a real space image shown on a windshield, etc., and/or a digital twin 3D image is layered on a navigation screen generated based on a current location and navigation information.

The navigation screen may be an AR navigation screen to which an AR technology is applied.

In addition, the term 'AR graphic interface' disclosed herein is a graphic user interface to which an augmented reality (AR) technology is applied, and AR merging of the AR graphic interface is performed on a front image of a vehicle in real time.

The AR graphic interface in this disclosure may be an AR graphic image representing a current driving state of the vehicle. In addition, the AR graphic interface disclosed herein may be an AR graphic image that further indicates a guide for a driving situation of the vehicle simultaneously with the current driving state of the vehicle. At this time, the guide for the driving situation of the vehicle is displayed on the front image of the vehicle at a predetermined distance and/or a predetermined time ahead of the corresponding driving situation.

Referring to FIG. 7, the AR display device 800 according to the embodiment of the present disclosure may be implemented as a part of an electrical component or system of the vehicle 100, or may be implemented as a separate independent device or system. Alternatively, the AR display device 800 may be implemented in the form of a program including instructions operated by a processor such as a user terminal of the vehicle 100 or the like.

The AR display device 800 may communicate with the vehicle 100, other devices, and/or servers to receive a front image of the vehicle acquired through an AR camera and sensing data acquired through sensors (e.g., a gyroscopic sensor, an acceleration sensor, a gravity sensor, a geomagnetic sensor, a temperature sensor, etc.) provided in the vehicle.

The AR display device 800 may operate a preset application, for example, an (AR) navigation application.

The AR display device 800 may render an AR graphic interface, which represents the current driving state of the vehicle based on map data (e.g., a map relating to a current location of the vehicle, route information, POI information, etc.) of the vehicle, sensing data, and a front image obtained by a camera, and provide the rendered AR graphic interface to an AR GUI surface and an AR camera surface of the navigation application in real time.

The AR display device 800 may render an AR object separated from the AR graphic interface to provide (indicate, display) a guide for a driving situation of the vehicle, based on the map data (e.g., the route information, the POI information, etc.), the sensing data, and the front image obtained by the camera, and provide the rendered AR object to the AR GUI surface and the AR camera surface of the navigation application in real time.

In this case, the separated AR object may be named 'second AR object', and the remaining part of the AR graphic interface after the second AR object is separated may be named 'first AR object'. That is, it can be said that the AR graphic interface includes the first AR object displaying the current driving state of the vehicle and the second AR object displaying the guide for the driving situation of the vehicle.

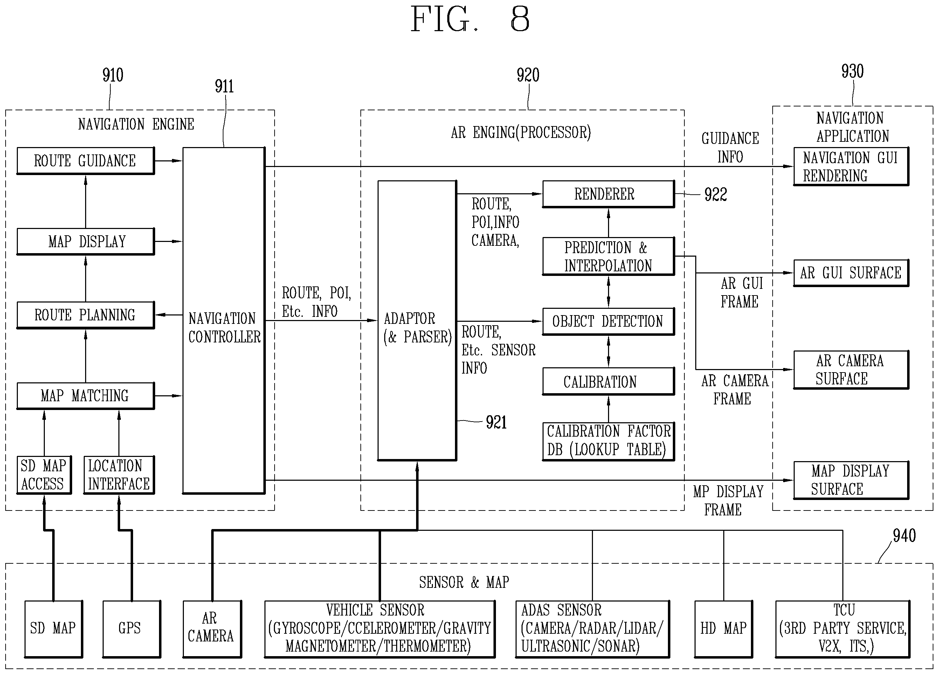

Hereinafter, FIG. 8 is a detailed block diagram related to a processor 820 of the AR display device 800 in accordance with the embodiment.

The conceptual diagram illustrated in FIG. 8 may include a configuration related to operations performed by the processor 820 of the AR display device 800 and information, data, and programs used for the operations. In this aspect, the block diagram illustrated in FIG. 8 may also be used to mean a service provided through the processor 820 and/or a system executed/implemented by the processor 820. Hereinafter, for convenience of explanation, it will be referred to as the processor 820.

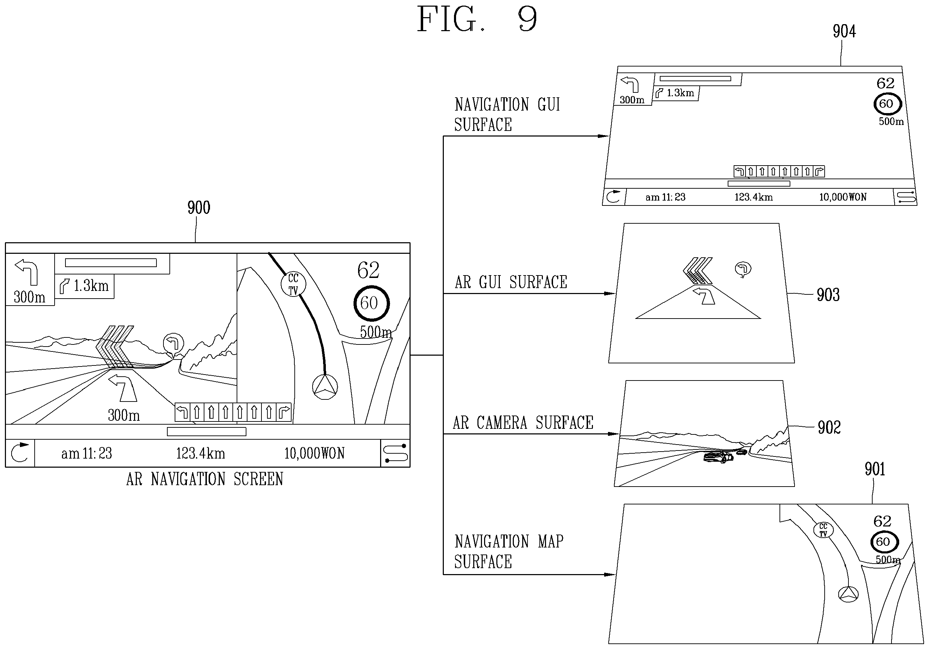

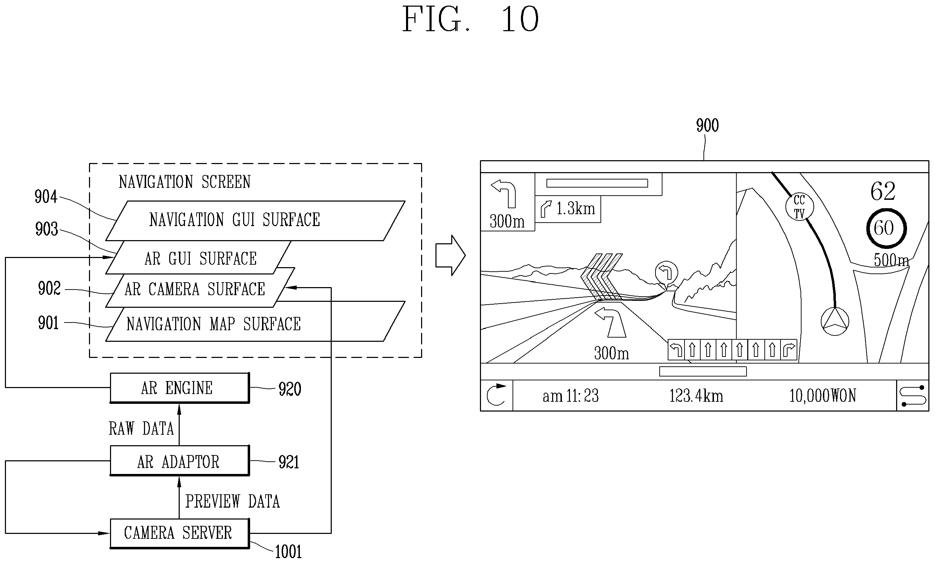

FIG. 9 is a diagram referenced to describe a navigation screen in accordance with an embodiment, and FIG. 10 is a diagram referenced to describe an operation of generating the navigation screen of FIG. 9.

Referring to FIG. 8, the processor 820 may include a navigation engine 910, an augmented reality (AR) engine 920, a navigation application 930, and a sensor and map 940 or may interoperably drive such components.

The navigation engine 910 may receive map data and location data (e.g. GPS data) from a vehicle or the like. The navigation engine 910 may perform map matching based on the map data and the GPS data. The navigation engine 910 may perform route planning according to the map matching. The navigation engine 910 may display a map and perform route guidance. The navigation engine 910 may provide route guidance information to the navigation application 930.

The navigation engine 910 may include a navigation controller 911. The navigation controller 911 may receive map matching data, map display data, and route guidance data.

The navigation controller 911 may provide route data, point of interest (POI) data, and the like to the AR engine 920 based on the received map matching data, map display data, and route guidance data.

The navigation controller 911 may provide the route guidance data and a map display frame to the navigation application 930.

The AR engine 920 may include an adapter 921 and a renderer 922. The adapter 921 may receive front image data acquired from a camera (e.g., AR camera), and sensing data acquired from sensors of the vehicle, for example, a gyroscopic sensor (Gyroscope), an accelerometer sensor (Accelerometer), a gravity sensor (Gravity), and a geomagnetic sensor (Magnetometer), and/or a temperature sensor (Thermometer).

The AR engine 920 may receive sensing data acquired from an ADAS sensor (e.g., camera, radar, lidar, ultrasound, or sonar). For example, the AR engine 920 may acquire driving-related sensing data, such as a driving direction and speed, a distance from a lane, and the like, as sensing data through the ADAS sensor.

The AR engine 920 may receive high-definition (HD) map data and a program related to the HD map data. Here, the high-precision map (HD Map) is a map for providing information related to detailed roads and surrounding terrains to an autonomous vehicle in advance, and has an accuracy within an error range of about 10 cm. The HD map also stores, in a 3D digital form, traffic lights, signs, curbs, road marks, and various structures as well as lane-unit information such as road centerlines and boundary lines.

The AR engine 920 may receive acquired sensing data, received data, control data, and related programs from a Telematics Control Unit (TCU) (e.g., third-party service, V2X, ITS communication, etc.).

The TCU of the sensor and map 940 is a communication control device mounted on the vehicle, and may perform communication with, for example, a vehicle to everything (V2X), which is a communication technology of communicating with various elements on roads for autonomous vehicles, (e.g., situation data collectible through V2V and V2I), and Intelligent Transport Systems (ITS) or Cooperative Intelligent Transport Systems (C-ITS), which are cooperative intelligent transport system technologies.

The AR engine 920 may perform calibration on a front image based on data provided from a calibration factor database (DB). The AR engine 920 may perform object detection based on front image data and route data. The AR engine 920 may perform prediction and interpolation based on the detected object.

The renderer 922 may perform rendering based on the route data, the POI data, and result data of the prediction and interpolation. The renderer 922 may provide an AR graphical user interface (GUI) frame and an AR camera frame to the navigation application 930.

The navigation application 930 may generate an AR navigation screen 900.

According to the embodiment of Fig. 8, the processor 820 of the AR display device 800 includes the navigation engine 910, the AR engine 920 and the navigation application 930. Alternatively, the processor 820 may include the AR engine 920 only. In other words, the AR engine 920 only may be executed by the processor 820, and the navigation engine 910 and the navigation application 930 may be executed by one or more processors outside the AR display device 800. Further alternatively, even the AR engine 920 also may be executed by one or more processors outside the AR display device 800. In this alternative scene, the AR display device 800 may only perform receiving rendered images and displaying them on the display 830. If necessary, the AR display device 800 may convert the rendered images suitably for a form factor of the AR display device 800 or decrypt the encrypted rendered images.

Referring to FIG. 9, the AR navigation screen 900 may include a navigation map surface 901, an AR camera surface 902, an AR GUI surface 903, and a navigation GUI surface 904.

The navigation application 930 may create the navigation map surface 901 based on the map display frame provided from the navigation controller 911. The navigation application 930 may create the AR camera surface 902 based on the AR camera frame provided from the renderer 922. The navigation application 930 may create the AR GUI surface 903 based on the AR GUI frame provided from the renderer 922. The navigation application 930 may generate the navigation GUI surface 904 based on the route guidance data provided from the navigation controller 911.

Referring to FIGS. 8 and 10 together, when the navigation application 930 is driven, the navigation application 930 may generate the navigation map surface 901, the AR camera surface 902, the AR GUI surface 903, and the navigation GUI surface 904.

The navigation application 930 may provide parameters of the AR camera surface 902 and parameters of the AR GUI surface 903 to the AR engine 920.

The AR engine 920 may register a callback function to receive front image data from a camera server 1001. The camera server 1001 may be understood as a concept included in a memory of the AR display device 800, for example.

The AR engine 920 may receive and crop the front image data. Cropping may include adjusting a size or position of an image, editing a partial region, adjusting transparency, and the like. The navigation application 930 may display the cropped front image on the AR camera surface 902. The AR engine 920 may perform AR merging in real time. Also, the navigation application 930 may display an AR GUI on the AR GUI surface 903 based on the cropped front image.

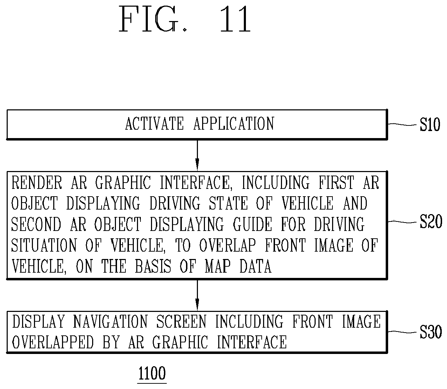

FIG. 11 is a flowchart referenced to describe a method 1100 for displaying an AR graphic interface on the navigation screen in accordance with the embodiment.

Each process of FIG. 11 may be performed by the processor (or the AR engine) unless otherwise noted. In addition, the processes of FIG. 11 may be performed by including the operations of the navigation engine 910, the AR engine 920, and the navigation application 930 by the processor 820 described above with reference to FIGS. 8 to 10, or at least some of the operations may be performed before or after the processes of FIG. 11.

Referring to FIG. 11, the method starts by activating a preset application (S10).

The preset application may be pre-installed on the AR display device 800 or may be driven by another device/server cooperating therewith, for example, in response to an execution of an AR mode of the vehicle. The preset application may be, for example, a navigation application executed in the AR mode during the driving of the vehicle.

The navigation application, for example, receives a route guidance and a map display frame based on map data and GPS data from the navigation engine, and generates navigation GUI rendering and a map display surface, respectively.

In addition, the navigation application, for example, generates an AR GUI surface by receiving an AR GUI frame from the AR engine, and generates an AR camera surface by receiving an AR camera frame. The navigation application renders the generated map display surface, AR camera surface, and AR GUI surface onto the navigation GUI surface.

The processor generates an AR graphic interface, which includes a first AR object displaying (outputting, indicating, providing) a driving state of the vehicle, and a second AR object indicating a guide for a driving situation of the vehicle, on the basis of map data acquired from a server, memory, or vehicle and sensing data of the vehicle, and renders the generated AR graphic interface to overlap a front image of the vehicle (S20).

The processor may perform AR merging of the AR graphic interface, which is generated in real time, with the front image of the vehicle in real time.

The processor displays (renders) the AR graphic interface in a state in which the first and second AR objects are combined. When a preset condition is satisfied, the processor displays (renders) the AR graphic interface in a state in which the second AR object is separated from the AR graphic interface.

Here, the preset condition may include a case where a change in driving situation of the vehicle is predicted from a current driving state based on the sensing data of the vehicle. The preset condition may include a case where it is detected that a change in driving situation of the vehicle from a current driving state is predicted or a need to guide the driving situation of the vehicle is predicted based on at least one of ADAS sensing data, high-definition map data, and TCU communication data such as V2X, ITS, and C-ITS.

Then, the processor displays the navigation screen including the front image overlapped by the AR graphic interface (S30).

The processor may render the AR graphic interface on the front image in a state in which the first and second AR objects are combined. The processor may generate the AR GUI surface and the AR camera surface, respectively, by providing the AR GUI frame and the AR camera frame corresponding to the AR graphic interface to the navigation application.

Thereafter, the generated AR GUI surface and AR camera surface are rendered on the navigation GUI surface, so that the front image with the rendered AR graphic interface is included in (displayed on) the navigation screen.

Meanwhile, the AR graphic interface may vary depending on a driving situation that is predicted to change based on the map data and the sensing data of the vehicle.

At this time, the AR graphic interface that varies is displayed with the plurality of AR objects separated, to provide a driver of the vehicle with intuitive guidance for the current driving state and the driving situation that is predicted to change.

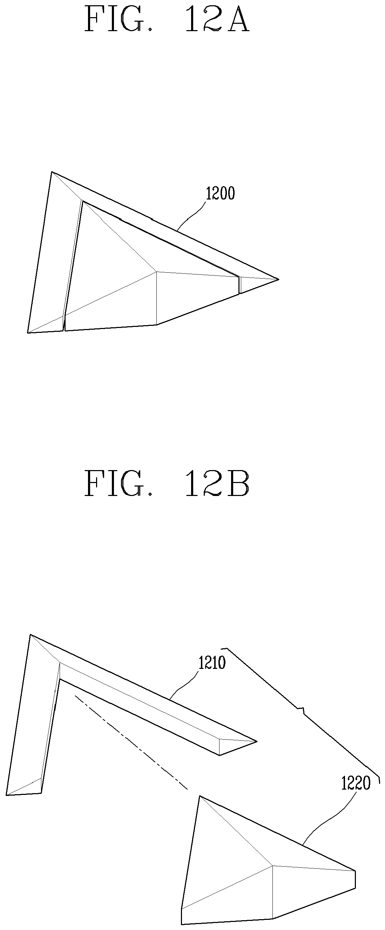

FIGS. 12A and 12B are diagrams illustrating an example of the AR graphic interface according to the embodiment of the present disclosure, which are referenced to describe separation and combination of the first and second AR objects based on a predicted change in driving situation.

Referring to the drawings, an AR graphic interface 1200 may be implemented as an AR image of a specific shape in a 3D form, and the AR image may be used to indicate road information, and the like in addition to a current driving direction, a driving speed, and steering information of the vehicle.

The AR graphic interface 1200 may be implemented in the form in which a first object and a second object are combined with each other.

Here, the first object may be implemented in the form of, for example, a 3D spade (e.g., a shovelshaped image), and the second object may be implemented in the form of a 3D chevron (e.g., A or V-shaped image) extending from the first object. However, this does not mean that the first and second objects are limited to these shapes.

The first object and the second object of the AR graphic interface 1200 may be combined such that an inner frame of the second object and an outer frame of the first object extend to be in contact with each other. In this case, the first and second objects may be expressed in different colors so as to be visually distinguishable from each other.

The AR graphic interface 1200 may be rendered such that the first and second objects move at the same distorted angle or different distorted angles in a combined state, to indicate the current driving state of the vehicle.

The generated AR graphic interface 1200 is displayed to overlap the front image of the vehicle included in the navigation screen. Specifically, the processor 820 generates the AR graphic interface 1200 indicating the current driving state of the vehicle based on the map data and the sensing data of the vehicle, renders the AR graphic interface 1200 based on route, POI information, etc., and sends the rendered AR graphic interface 1200 to the navigation application 930. Accordingly, the AR graphic interface 1200 is displayed to overlap the front image of the vehicle included in the navigation screen.

Referring to FIG. 12B, the processor 820 may separate the first and second AR objects 1210 and 1220 of the AR graphic interface based on a driving situation that is predicted to change based on the map data and the sensing data of the vehicle, render the separated second AR object 1210 to display guidance related to the changed driving situation, and update the AR GUI surface and the AR camera surface of the navigation application 930.

The condition in which the first and second AR objects 1210 and 1220 are separated may include a case where a change in driving situation of the vehicle is predicted from the current driving state of the vehicle based on the sensing data of the vehicle.

Alternatively, the condition in which the first and second AR objects 1210 and 1220 are separated may include a case where it is detected that a change in driving situation of the vehicle from a current driving state is predicted or a need to guide the driving situation of the vehicle is predicted based on at least one of ADAS sensing data, high-definition map data, and TCU communication data such as V2X, ITS, and C-ITS.

Meanwhile, the separated second AR object 1210 is displayed by extending from a display position of the first AR object 1220. Since the first AR object 1220 indicates the current driving state of the vehicle (e.g., the current position and driving direction of the vehicle), the driver can intuitively determine a time point and a driving direction to drive the vehicle according to the guidance indicated by the second AR object 1210.

A spaced distance between the first and second AR objects 1210 and 1220 may correspond to a time point or distance at which the driving situation of the vehicle is predicted to change.

Also, although not illustrated in detail, the separated second AR object 1210 may be implemented by a plurality of fragments. A predetermined interval may be maintained between the plurality of fragments.

In addition, a direction indicated by each of the plurality of fragments may gradually point to a predicted situation occurrence location (or situation end location). For example, if the separated second AR object 1210 is implemented by a total of 5 fragments, each of the 5 fragments may point to the same location (e.g., a predicted situation occurrence location) at different distorted angles.

The plurality of fragments may be displayed in the form of moving a specific distance ahead of the first AR object 1220. That is, the plurality of fragments do not fixedly appear at a specific location or time point but are implemented to provide driving guidance according to a driving situation predicted during movement on the basis of the current location and driving state of the vehicle.

A moving speed of the plurality of fragments may correspond to a degree (e.g., driving speed) that the vehicle approaches closely.

Also, the number and/or display length of the plurality of fragments may be proportional to a time or distance that a predicted situation continues. For example, a larger number of fragments may be included or a total display length may be longer in the case where the situation continues for a long time than that in the case where the situation does not continue for a long time.

A fragment, which is close to the first AR object 1220 among the plurality of fragments, displays a guide to be associated with the driving state indicated by the first AR object 1220.

A fragment, which is farthest away from the first AR object 1220 among the plurality of fragments, displays a guide to be associated with a predicted situation.

That is, the plurality of fragments of the separated second AR object 1210 provides a guide for a situation, which is predicted from the current driving state corresponding to the first AR object 1220, in a more gradual and seamless manner.

When the situation corresponding to the condition that the second AR object 1210 is separated ends, the separated second AR object 1210 is then displayed back in the combined state with the first AR object 1220. That is, the AR graphic interface 1200 as illustrated in FIG. 12A may be displayed again.

The term 'combined state' in the present description means that the first and second AR objects are connected to each other on the screen, or the two AR objects are put relatively closer to each other on the screen than the 'separated state' where the two AR objects are separated from each other. Similarly, the meaning of the expression 'joining the first and second AR objects to each other' in the present description comprises not only connecting the first and second AR objects to each other but also putting the first and second AR objects close together with a relatively smaller gap between them than a case of 'separating the second AR object from the first AR object'.

Hereinafter, the AR display device 800 according to the present disclosure may receive the front image of the vehicle acquired by the AR camera and the map data through the communication module 810.

The processor 820 of the AR display device 800 may open a preset application (e.g., the navigation application 930), and render an AR graphic interface, which includes a first AR object indicating a driving state of the vehicle and a second AR object showing a guide for a driving situation of the vehicle, based on the received map data to overlap the received front image of the vehicle.

The display 830 of the AR display device 800 may display a navigation screen on which the AR graphic interface output on an AR GUI surface has overlapped the front image of the vehicle according to the rendering.

At this time, the navigation screen displayed on the display 830, as described above, may include not only an image output to an LCD display module, etc., but also an image reflected on the LCD screen through a camera sensor, a real space image shown on the windshield/dashboard, a digital twin 3D image, and the like. With respect to head-up display devices, the display of the present disclosure may refer to a display or screen within a picture generation unit (PGU), a mirror or reflector reflecting images provided from the PGU, or a combiner upon which the images are finally projected.

According to an embodiment, the processor 820 may perform rendering by varying the AR graphic interface on the basis of a next driving situation of the vehicle that is estimated based on the received map data and the current location of the vehicle.

Here, the variation of the AR graphic interface may include all of a case where the variation occurs in the state that the first and second objects of the AR graphic interface are combined with each other, and a case where the variation occurs in the state that the first and second objects of the AR graphic interface are separated from each other.

In the former case, the next driving situation of the vehicle may be indicated in a manner that the first and second objects are output in the combined state at different distorted angles.

In the latter case, the first and second objects may be separated from each other such that the first object continues to show the current driving state of the vehicle and the separated second object shows guide driving information according to a predicted next driving situation. At this time, the guide driving information according to the predicted next driving situation may include a change in shape of the separated second object (e.g., unfolding of the plurality of fragments, a change in number, rotation of some of the fragments, etc.) and/or a change in color (e.g., a change to a color (e.g., red) for a warning notification).

According to an embodiment, the variation of the AR graphic interface is performed at a second location which is a predetermined time point or distance ahead of a first location where the next driving situation of the vehicle starts (e.g., a predicted situation occurrence point/section/time or a predicted situation end point/section/time).

For example, at a location of 150 to 200 m before the start or entry of the predicted next driving situation, the second AR object may be separated from the AR graphic interface, and the separated second AR object may show a guide in real time. At this time, the first AR object continues to show the current driving state of the vehicle.

In an embodiment, the second location may vary depending on type, characteristic, and road condition of the predicted driving situation.

In addition, after the second AR object is varied (e.g., separated) at the second location, the second AR object is guided to be connected to the current driving state of the vehicle as it is closer to the second location, and to approach the next driving situation as it is closer to the first location.

The processor 820 may determine whether any one of a first condition and a second condition is satisfied based on at least one of the map data, the current location, and the navigation information of the vehicle.

The first condition is a case in which the driving situation of the vehicle does not significantly change from the current driving state, and may include, for example, going straight, curving, slowing down, entering a tunnel, and the like.

The second condition may include a case in which a change in driving situation of the vehicle is predicted or a case in which a need to guide the driving situation is predicted. For example, the second condition may include lane change prediction, left turn/right turn, collision possibility detection, approach to destination, and the like.

When the first condition is satisfied, the processor 820 may display the AR graphic interface in the combined state of the first and second AR objects. When the second condition is satisfied, the processor 820 may display the AR graphic interface in which the first and second AR objects are separated to show the next driving situation on the separated second AR object.

The processor 820 may update the AR graphic interface such that, when the current location of the vehicle passes through the first location in the separated state of the first and second AR objects, the first and second AR objects are combined or put together again until another new next driving situation of the vehicle is detected.

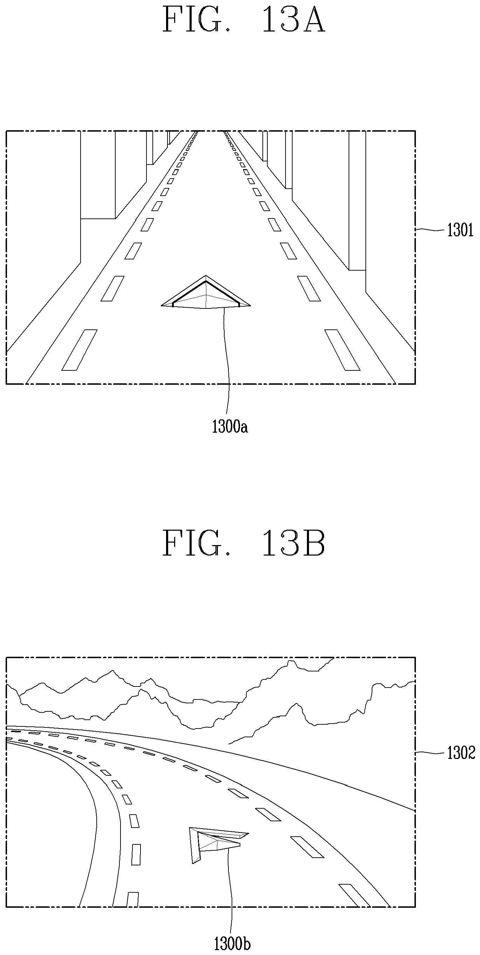

Hereinafter, various examples related to rendering an AR graphic interface on a navigation screen by varying it differently for each predicted driving situation according to an embodiment, will be described in detail with reference to FIGS. 13A, 13B, 14A, 14B, 14C, 15A, 15B, 16A, 16B, 16C, 16D, 17A, 17B, 17C, 18, 19A, 19B, 20, 21, 22, 23A, 23B, 24, and 27.

[Straight/curved road]

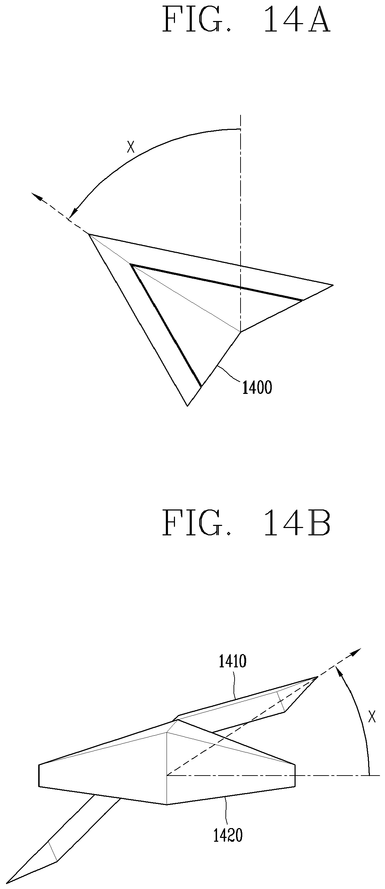

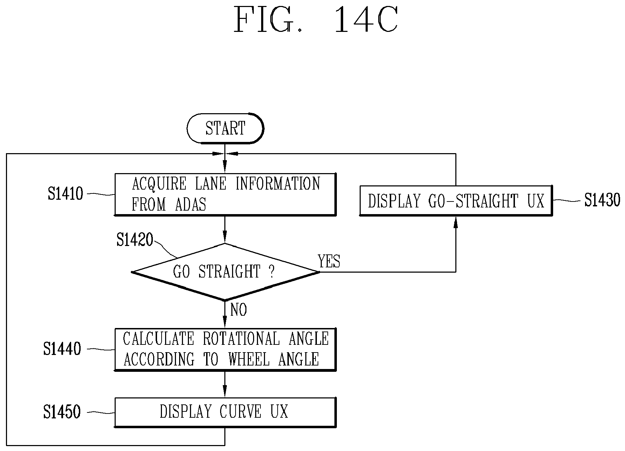

Referring to FIGS. 13A, 13B, 14A, 14B, and 14C, the AR display device 800 according to the present disclosure may provide a UX that includes information related to a shape of a road through an AR graphic interface overlaid on a front image of the vehicle while the vehicle travels.

A next driving situation of the vehicle indicated through the second AR object may include road shape information that is estimated based on at least one of map data and sensing data of the vehicle and a current location of the vehicle.

According to an embodiment, the processor 820 may update the AR graphic interface to reflect a change corresponding to the road shape information on which the vehicle is currently traveling.

The processor 820 may render the AR graphic interface to reflect a curvature or slope of a currently traveling road, such that one (e.g., the second AR object) or both (e.g., the first and second AR objects) of combined AR objects constituting the AR graphic interface move in at least one of three axial directions (x-axis, y-axis, and z-axis).

Specifically, the processor 820 calculates a distorted angle or a rotational angle of the AR graphic interface based on the road shape information included in the received map data, and renders the AR graphic interface to reflect the calculated distorted angle or rotational angle, thereby providing assistance for a steering control value of the vehicle and convenience to a driver.

FIG. 13A illustrates an example of a front image 1301 when the vehicle travels on a straight road, and FIG. 13B illustrates an example of a front image 1302 when the vehicle travels on a curved road.

In an AR graphic interface 1300a overlaid on the front image 1301 of FIG. 13A, first and second objects are displayed as UXs in the same direction without distortion.

On the other hand, in an AR graphic interface 1300b overlaid on the front image 1302 of FIG. 13B, first and second objects are displayed as UXs in a distorted or rotated state based on direction and degree of a curve. At this time, the degrees of distortion or rotation of the first and second objects of the AR graphic interface 1300b are different from each other.

A rotational motion of a vehicle includes roll, pitch, and yaw. Roll rotation is a phenomenon in which the vehicle rotates centering on a longitudinal axis (x-axis). Pitch rotation is a phenomenon in which the vehicle rotates centering on a lateral axis (y-axis) of the vehicle. Yaw rotation is a phenomenon in which the vehicle rotates centering on a vertical axis (z-axis).

On a curved road, the roll and yaw rotations of the vehicle are observed.

According to an embodiment, the AR graphic interface may be displayed to rotate in a first direction based on a vehicle steering value corresponding to road shape information. Here, the first direction may include rotational directions of yaw rotation and roll rotation of the vehicle steering value corresponding to a curved direction of the road.

The processor 820 may render the AR graphic object so that a degree of distortion between the first and second AR objects constituting the AR graphic interface increases as the vehicle steering value (absolute value) increases. The degree of distortion between the first and second AR objects increases as the roll rotation of the vehicle steering value corresponding to the curved direction of the road increases.

For example, referring to FIGS. 14A and 14B, in a curve section (e.g., counterclockwise curve) of the vehicle, an AR graphic interface 1400 may be updated such that first and second objects 1420 and 1410 are yaw-rotated (X) to correspond to a curved direction (e.g., counterclockwise) based on direction and degree of a curve. Additionally, the second object 1410 of the AR graphic interface 1400 may be displayed to be roll-rotated to correspond to the curved direction (e.g., counterclockwise direction) (X).

The yaw rotation value of the first and second objects 1420 and 1410 may be calculated as a value, for example, between -180° and +180° based on a current driving state of the vehicle and map data.

The roll rotation value of the second object 1410 may be calculated as a value, for example, between -45° and +45° based on the current driving state of the vehicle and the map data.

Here, the signs '+' and '-' of the yaw rotation value and the roll rotation value correspond to the steering value of the vehicle according to the direction of the curve. As illustrated in FIG. 13B, the counterclockwise curve has a yaw rotation value and a roll rotation value of a sign '+'. On the other hand, a clockwise curve may have a yaw rotation and a roll rotation of a sign '-'.

The yaw rotation value of the first and second objects 1420 and 1410 corresponding to the direction and degree of the curve may be calculated as follows.

[Equation 1]

$$[\text{Yaw rotation value}] = \text{Yaw coefficient} \times \text{Vehicle steering value (wheel angle)}$$

The roll rotation value of the second object 1410 corresponding to the direction and degree of the curve may be calculated as follows.

[Equation 2]

$$[\text{Roll rotation value}] = \min \left( \mid \text{Roll coefficient} \times \text{Wheel angle} \mid, 45 \right) \times \text{Sign ('+' or '-') of wheel angle},$$

where the maximum value '45' is changeable.

Here, the Yaw coefficient and the Roll coefficient indicate a ratio for adjusting an extent (level, degree) of rotation when the wheel angle is applied to the yaw rotation value of the first and second objects 1420 and 1410 and the roll rotation value of the second object 1410.

Here, the sign of the wheel angle has a positive number ('+') or a negative number ('-'), and for example, has a value '0' in the case of a straight road as illustrated in FIG. 13A. As a curvature of a curve increases, an absolute value of the wheel angle also increases.

Therefore, as the curvature of the curve increases, the yaw rotation value of the first and second objects 1420 and 1410 increases and the roll rotation value of the second object 1410, namely, a degree of distortion of the second object 1410 relative to the first object 1420 further increases.

On the other hand, when the vehicle passes through the curve section, the first and second objects 1420 and 1410 are displayed as UXs in a combined state in the same direction without distortion.

FIG. 14C illustrates a method of obtaining road information of a vehicle based on sensing data acquired through an ADAS sensor of the vehicle and displaying an AR graphic interface to vary depending on a vehicle steering value corresponding to acquired lane information.

First, the processor 820 obtains lane information as road information of the vehicle based on sensing data obtained through the ADAS sensor of the vehicle (S1410). The processor 820 determines whether a predicted driving situation is to go straight based on the lane information (S1420).

In case of a go-straight road, the processor 820 displays an AR graphic interface without distortion along the go-straight road in the form in which first and second AR objects are combined (S1430).

In case of a curved road other than the go-straight road, the processor 820 calculates rotation values according to a wheel angle of the vehicle along the curved road, namely, a yaw rotation value and a roll rotation value corresponding to curved degree and direction of the curved road (S1440).

The processor 820 displays the UX of the AR graphic interface, in which the first and second AR objects are varied into a distorted shape, based on the calculated yaw rotation value and roll rotation value (S1450). At this time, in response to the prediction of the curved road, the processor 820 provides an AR GUI frame for the varied AR graphic interface to the navigation application in real time, so that an AR GUI surface is updated in real time.

[Slope of road]

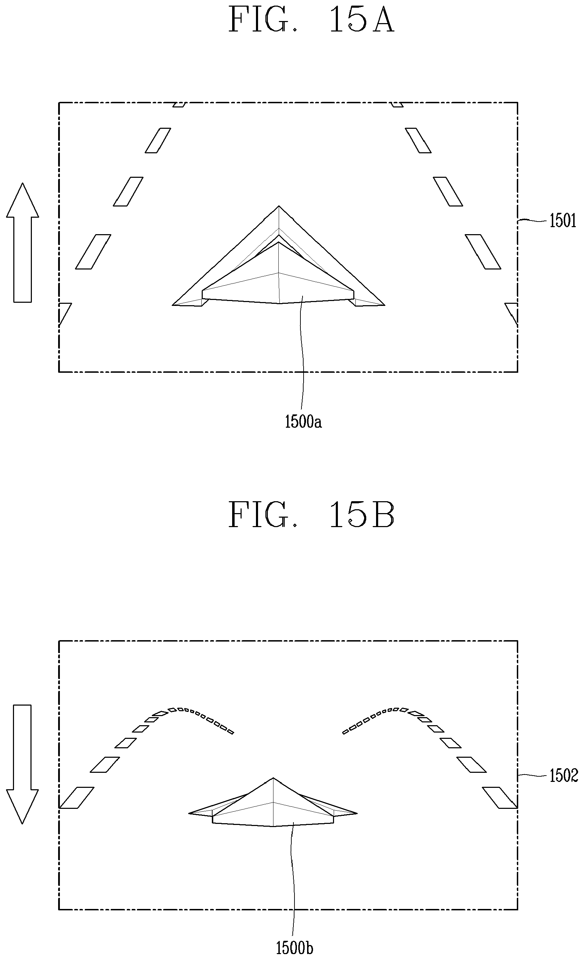

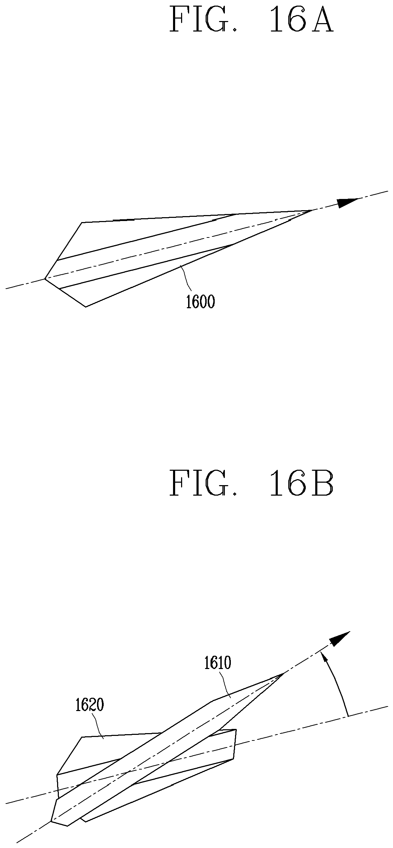

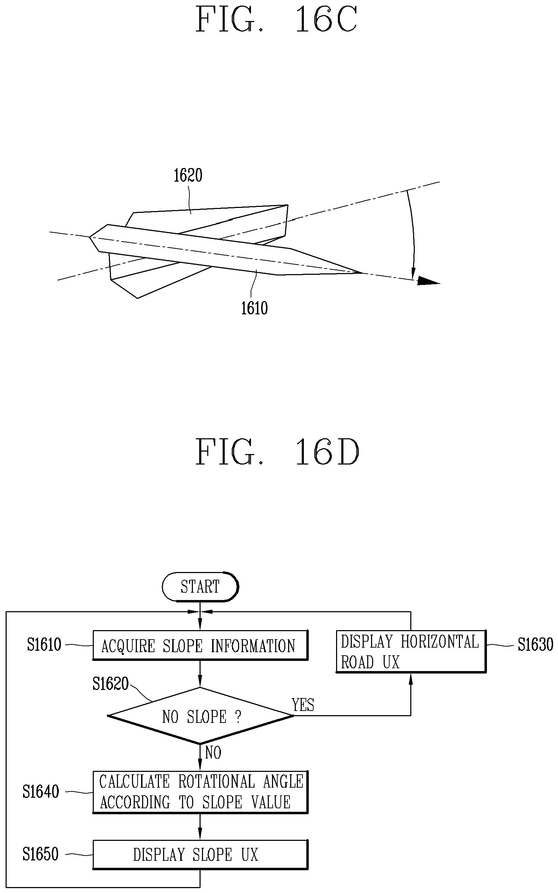

Referring to FIGS. 15A, 15B, 16A, 16B, 16C, and 16D, the AR display device 800 according to the present disclosure may provide UX that includes information related to a slope of a road through an AR graphic interface overlaid on a front image of the vehicle while the vehicle travels.

A next driving situation of the vehicle indicated through the second AR object may include driving on a road having slope, that is estimated based on at least one of map data and sensing data (or data of the ADAS sensor) of the vehicle and a current location of the vehicle. In this case, the slope information may include information related to location and angle of the slope.

According to an embodiment, the processor 820 may display an AR graphic interface to rotate in a second direction based on a slope angle (i.e., slope) included in the road shape information.

The processor 820 may display the AR graphic interface such that a second AR object of the AR graphic interface is pitch-rotated in a second direction corresponding to the direction of the slope.

The processor 820 may update the AR graphic interface so that the direction and degree of the pitch-rotation angle of the second AR object relative to the first AR object are changed according to the direction and degree of the slope angle included in the road shape information on which the vehicle is traveling.

The slope angle included in the road shape information on which the vehicle is traveling may be acquired through, for example, a high-definition map (HD Map) or slope information (e.g., location and angle of the slope) included in the ADAS sensing data. The processor 820 updates the information related to the acquired location and slope angle to be reflected to the second AR object of the AR graphic interface.

FIG. 15A illustrates a varied AR graphic interface 1500a displayed on a front image 1501 of an uphill road. It can be seen that a second AR object guiding a predicted driving situation is rotated upward (+y-axis) along a direction of the slope.

FIG. 15B illustrates a varied AR graphic interface 1500b displayed on a front image 1502 on a downhill road. Here, it can be seen that a second AR object guiding a predicted driving situation is rotated downward (-y-axis) along a direction of the slope.

In the case of a horizontal road without a slope, as illustrated in FIG. 16A, the combined first and second AR objects of the AR graphic interface 1600 is displayed to point in the same direction.

While driving in a slop section, the second AR object is varied to be pitch-rotated relative to the first AR object, in response to the acquired location and slope angle. For example, on an uphill road as illustrated in FIG. 16B, the second AR object 1610 is displayed by being pitch-rotated in an upward direction relative to the first AR object 1620. Alternatively, for example, on a downhill road as illustrated in FIG. 16C, the second AR object 1610 is displayed by being pitch-rotated in a downward direction relative to the first AR object 1620.

Meanwhile, after the vehicle passes the uphill or downhill slope section, the first and second AR objects of the AR graphic interface 1600 is displayed again to point in the same direction at the same angle in the form in which the first and second AR objects are combined as illustrated in FIG. 16A.

Pitch rotation is a phenomenon in which the vehicle rotates centering on a lateral axis (y-axis) of the vehicle.

The pitch rotation value of the second AR object 1610 corresponding to the direction and degree of the slope angle of road may be calculated as follows.

[Equation 3]

[Pitch rotation value] = Slope coefficient x Actual slope angle of road (road angle)

Here, the slope coefficient is a ratio for adjusting an extent of rotation when an actual slope angle of the road is applied to a pitch rotation value of the second AR object.

Here, as the actual slope of the road increases, the pitch rotation value of the second AR object increases, so the slope angle of the second AR object further increases relative to the first AR object.

FIG. 16D illustrates a method of acquiring slope information related to a road based on sensing data acquired through an ADAS sensor of the vehicle or an HD map, and displaying an AR graphic interface to vary depending on the acquired slope information.

First, slope information of a road may be acquired based on sensing data or map data acquired through an ADAS sensor of the vehicle or an HD map (S1610). The processor 820 determines whether a predicted driving situation is a slope road based on the acquired slope information (S1620).

In the case of a horizontal road without a slope, the processor 820 displays a UX of an AR graphic interface without a slope along the horizontal road in the form in which first and second AR objects are combined (S1430).

In the case of a road with a slope, the processor 820 calculates a value corresponding to the slope angle of the road, that is, a pitch rotation angle of the vehicle according to direction and angle of the slope (S1640).

The processor 820 displays the AR graphic interface to be varied in a manner that the second AR object is inclined relative to the first AR object based on the calculated pitch rotation value (S1650). In response to the prediction of the slope road, the processor 820 provides an AR GUI frame, in which the AR graphic interface is varied, to the navigation application in real time, so that the AR GUI surface is updated in real time.

As described above, the AR display device 800 according to the present disclosure provides driving assistance to the driver of the vehicle by visually providing a UX for predicted road curve and road slope along with a state of a current driving road.

[Route search rendering]

In the present disclosure, state information and setting information of a navigation system may be referred to so as to determine a next driving situation of the vehicle, which is indicated by the second AR object of the AR graphic interface.

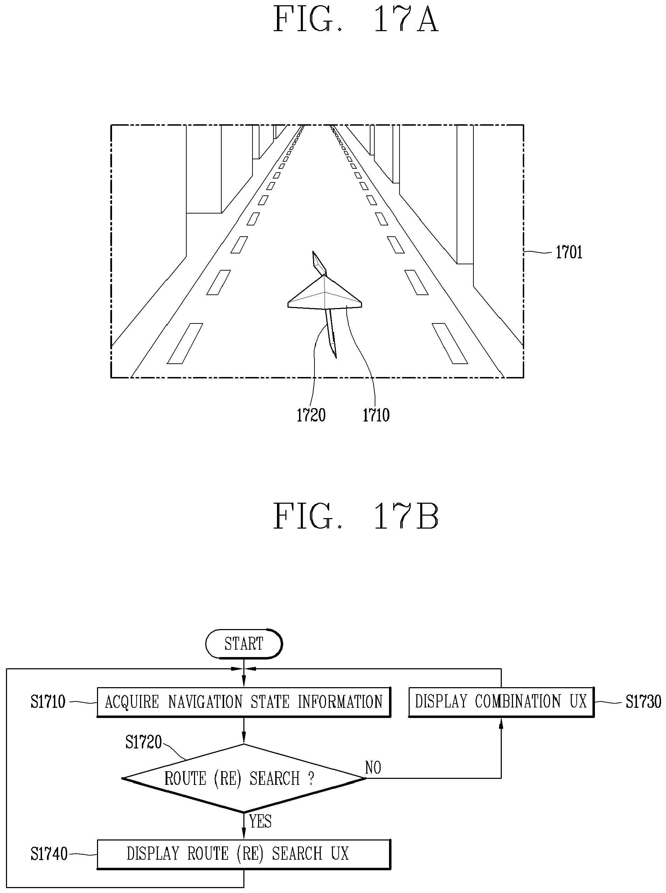

Referring to FIGS. 17A, 17B, and 17A, the AR display device 800 according to the present disclosure may provide UX that includes state information of a navigation system through an AR graphic interface overlaid on a front image of the vehicle while the vehicle travels.

As the next driving situation of the vehicle indicated by the second AR object, the state information of the navigation system interoperating with the vehicle may be referred to. In this case, the state information of the navigation system may include usage state data, operation state data, and the like of the navigation system.

The processor 820 may receive, for example, state information (e.g., usage state data, operation state data) of the navigation system from the navigation application. The processor 820 may then update the AR graphic interface such that the second AR object is separated (or partially combined) and is rotated relative to the first AR object while the first AR object is showing the current driving state of the vehicle. A state of the vehicle in which a route search is being performed by the navigation system (i.e. referred to as 'route (re-)search state' of the vehicle) is recognized as a next driving situation of the vehicle. In other words, the term 'router (re-)search state' refers to a state in which the vehicle is searching a route to a particular destination.

Referring to FIG. 17A, while the vehicle is traveling, the processor 820 may determine whether the state of the vehicle is a route (re-)search state, and display the route (re-)search state by use of a second AR object 1710. Specifically, the second AR object 1710 is separated from a first AR object 1720.

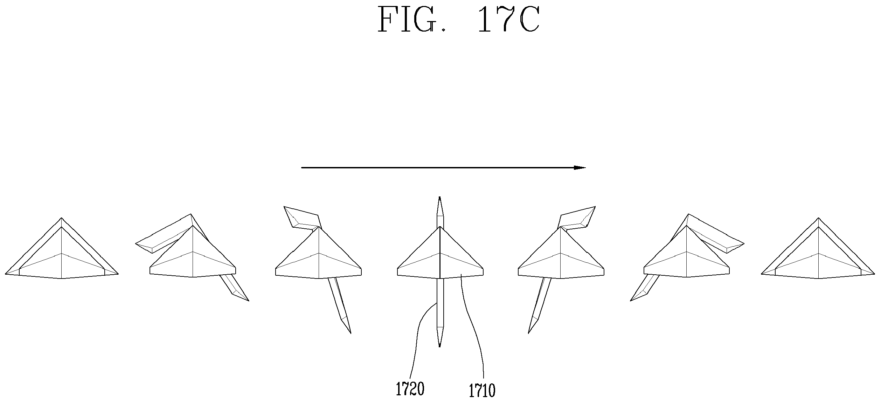

For example, the second AR object 1710 may turn 360 degrees in place relative to the first AR object 1720. At this time, as illustrated in FIG. 17C, an animation effect in which the second AR object 1710 turns 360 degrees may be output. In addition, the second AR object 1710 may repeatedly turn in place until the route (re-)search state ends.

According to this, the driver of the vehicle can recognize or find out easily through the indication of the second AR object 1710 that the route information of the navigation system is now being updated or to be (re)updated, while continuously checking the current driving state through the first AR object 1720.

Hereinafter, a method of varying an AR graphic interface based on state information of a navigation system will be described with reference to FIG. 17B.

First, the processor 820 may acquire state information (e.g., usage state data, operation state data, etc.) of a navigation system through the navigation application (S1710). The processor 820 determines whether or not the navigation system is in a state of (re-)searching a route for route update guidance (S1720).

When the state is not the route (re)search state, the processor 820 renders the AR graphic interface in a manner that the first and second AR objects are combined with each other (S1730).

When the state is the route (re-)search state, the processor 820 renders the AR graphic interface to be varied such that the second AR object separated from the first AR object turns 360 degrees relative to the first AR object, so as to indicate the route (re-)search state (S1740). This motion of the second AR object is repeated until the route (re-)search state ends.

The processor 820 provides an AR GUI frame for the AR graphic interface varied for indicating the route (re)search to the navigation application in real time, so that the AR GUI surface is updated in real time.

The processor 820 may update the AR graphic interface such that the first and second AR objects are combined again, in response to the end of the route (re-)search state (e.g., route searched, route search canceled).

[Warning about speeding]

Meanwhile, the AR display device 800 according to the present disclosure may change the AR graphic interface to notify a warning to a user of the vehicle about a situation in which a problem associated with the driving of the vehicle is anticipated. This situation is referred to as 'driving warning situation'. The driving warning situation may include a situation in which the vehicle exceeds a speed limit or is traveling at speed very close to the speed limit, and/or a situation in which collision between the vehicle and another vehicle or object may happen.

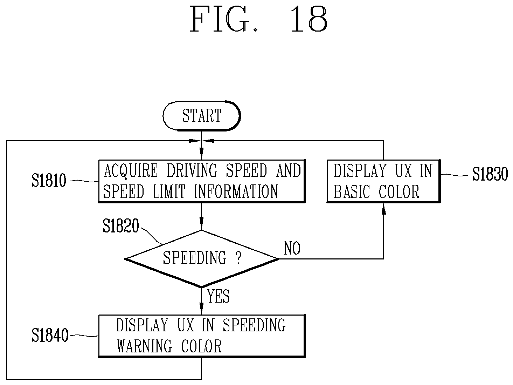

Referring to FIG. 18, the AR display device 800 according to the present disclosure may provide a UX informing of the driving warning situation through an AR graphic interface overlaid on a front image of the vehicle while the vehicle is traveling.

The driving warning situation may be recognized or anticipated based on sensing data of the vehicle and navigation information. The next driving situation of the vehicle indicated by the second AR object may include this driving warning situation.

When the driving warning situation of the vehicle is recognized based on the sensing data of the vehicle and the navigation information, the processor 820 may change an image of the AR graphic interface to include a notification about the driving warning situation.

Referring to FIG. 18, the processor 820 may acquire a current driving speed of the vehicle and speed limit of a road on the basis of sensing data (e.g., CAN data) of the vehicle and navigation information (e.g., speed limit information, crosswalk information, etc. related to the road) (S1810).

The processor 820 may determine whether the driving speed exceeds the speed limit of the road based on the obtained information (S1820), and display a determination result as a UX through an AR graphic interface in which first and second AR objects are combined with each other.

When it is determined that the driving speed of the vehicle exceeds the speed limit of the road (or is very close to the speed limit), the processor 820 updates the AR graphic interface to be changed to a color (e.g., red, orange, etc.) which can provide a visual warning notification (S1840). In this case, an extent of the color change may correspond to an extent of speeding, and the warning notification corresponding to the extent of speeding may be displayed in stages.

To this end, when the speeding of the vehicle is recognized as the driving warning situation, the processor 180 may change at least one of color, shape, blinking, and highlighting of the AR graphic interface. In addition, the processor 820 provides the AR GUI frame corresponding to the changed information to the navigation application, so that the navigation application 930 updates the AR GUI surface.

When the vehicle is not speeding, the processor 820 displays the AR graphic interface, in which the first and second AR objects are combined, in a basic color (S1830). In addition, even when checking the speeding state is finished, the processor 820 displays the AR graphic interface, in which the first and second AR objects are combined, in the same basic color.

[Left/right turn and Exit]

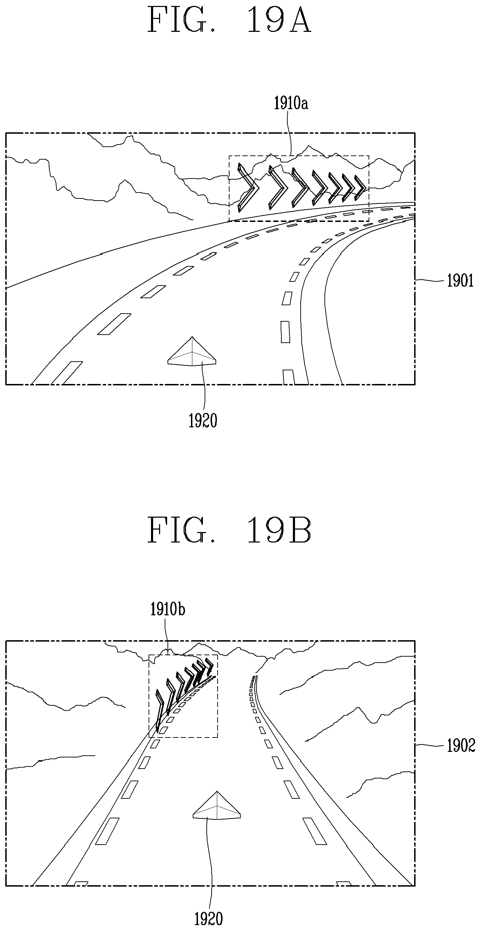

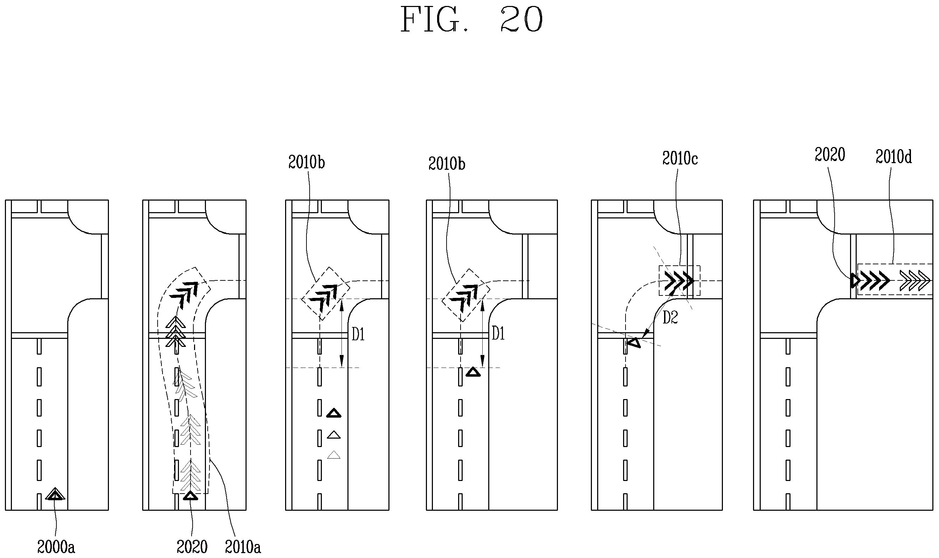

Hereinafter, referring to FIGS. 19A, 19B, and 20, the AR display device 800 according to the present disclosure may provide a UX having AR graphic objects overlaid on a front image of the vehicle, which includes Turn By Turn (TBT) information related to a point where the vehicle has to turn left/right or exit,.

In other words, the TBT information related to the left/right turn and exit points of the vehicle, which is estimated based on map data and the current location of the vehicle, preferably further based on sensing data of the vehicle and/or lane information of a high-definition (HD) map, may be included as a next driving situation of the vehicle indicated through the second AR object.

When turning is recognized (predicted) as the next driving situation of the vehicle based on the map data and the current location of the vehicle, preferably further based on the sensing data of the vehicle, the processor 820 may separate and locate the second AR object of the AR graphic interface at a second location (i.e., the aforementioned 'second location') corresponding to the estimated TBT information. This separation and relocation of the second AR objection may be performed while the first AR object of the AR graphic interface shows a current driving direction of the vehicle. The separated second AR object may indicate at least one of direction and route of the turning.

In this case, the TBT information can be intuitively recognized through the separated second AR object, which can facilitate driving according to the left/right turn and the exit.

To this end, the processor 820 may determine through the navigation system whether or not guidance for the left/right turn and exit information is required, and if necessary, check a turn or exit direction corresponding to the left/right turn and/or exit information. The processor 820 may determine location and direction for the vehicle to travel using lane information (HD map).

In addition, when it is recognized that the vehicle has entered within a predetermined distance (e.g., 150 to 200 m) from a left/right turn or exit point, the processor 820 may separate the second AR object in advance, and display the separated AR object to keep moving a predetermined distance ahead of the first AR object which indicates the current location of the vehicle.

At this time, it is important to accurately indicate (show) a point where the second AR object is first separated (hereinafter, 'separation movement point') and a point where the second AR object starts to work as route guidance in the separated state (hereinafter, 'route guidance point'). Since the driver can easily recognize the route guidance through the AR graphic interface and prepare the next driving operation in advance from the separation movement point rather than from the route guidance point, it is very helpful for driving. In addition, since the route guidance through the second AR object that moves separately is calibrated to exactly match the navigation screen on which the second AR object is rendered, the driver can easily follow the guided route.

In FIG. 19A, it can be seen that a UX for guiding a right-turn (or left-turn) point is rendered with a second AR object 1910a separated from a first AR object 1920 on a front image 1901.

In FIG. 19B, it can be seen that a UX for guiding an exit point is rendered with a second AR object 1910b separated from a first AR object 1920 on a front image 1901. In this case, the second AR object 1910b may be displayed vertically on a lane boundary line to guide the vehicle not to deviate from the corresponding lane.

In both FIGS. 19A and 19B, when the vehicle turns left/right or enters within a predetermined distance from an exit point, the second AR object may be separated from the AR graphic interface. After the separation, the second AR object may move along with the vehicle while the vehicle travels, to accurately guide a location where the vehicle has to turn left/right or the exit point to exit a road.

In addition, as illustrated, the separated second AR object is divided by a plurality of fragments forming a partial route. When the vehicle closely approaches the plurality of fragments (more precisely, a fragment close to the first AR object rendering the current driving state), the plurality of fragments also move while maintaining a predetermined distance from the vehicle (or the first AR object).

A partial guide route that moves is generated such that a fragment close to the first AR object, among the plurality of fragments, is connected to the current driving state of the vehicle rendered by the first AR object and a fragment farthest from the first AR object is associated with a left/right turn point or an exit point.

The processor 820 may provide an AR GUI frame generated based on the generated partial guide route to the navigation application 930, such that an AR GUI service is updated in the navigation application 930.

Meanwhile, after the left/right turn is completed or the exit is passed, the separated second AR object is changed into a combined form with the first AR object.

Hereinafter, a method of providing an AR graphic interface to be varied in a situation where a right turn of a vehicle is predicted will be described in detail, with reference to FIG. 20.

First, while the vehicle is going straight, an AR graphic interface 2000a in which first and second AR objects are combined is displayed in the same direction as a direction that the vehicle goes straight.

When the vehicle is predicted to enter an exit as a next driving situation based on map data, and navigation information, preferably further based on sensing data of the vehicle, the processor 820 displays the AR graphic interface in a state where the first and second AR objects 2010a and 2020 are separated at a point, which is a predetermined distance (e.g., 150 to 200 m) ahead of a location where the vehicle has to turn toward the exit, that is, at the 'separation movement point'.

Thereafter, the second AR object 2010a gradually moves from a current location to the exit point, and the first AR object 2020 moves according to the driving state of the vehicle. The second AR object 2010b may then be rendered as a partial guide route for guiding a turning direction in which the vehicle should travel at the exit point.

After the movement of the second AR object, when the first AR object moving along the driving of the vehicle approaches the exit point within a predetermined distance D1 (e.g., 10 m), the second AR object 2010b displays the partial guide route in real time while maintaining a predetermined distance from the location of the vehicle (i.e., the first AR object).

Then, when the location of the vehicle (i.e., the first AR object) reaches the exit point, the second AR object 2010c then shows a guide corresponding to the next driving situation while moving with a predetermined distance D2 (e.g., 5 m to 10 m) from the first AR object.

When the vehicle turns right and completely passes the exit point, the second AR object 2010d is displayed in the separated state for a predetermined period of time. Then, when the predetermined period of time elapses, the second AR object 2010d is moved back close to the location of the first AR object and is coupled to the first AR object.

The information related to the indication by the first and second AR objects, which varies in real time, is rendered through the AR engine, and based on this, the AR GUI frame information is provided to the navigation application to update the AR GUI surface in real time.

[Rotary intersection route guidance]

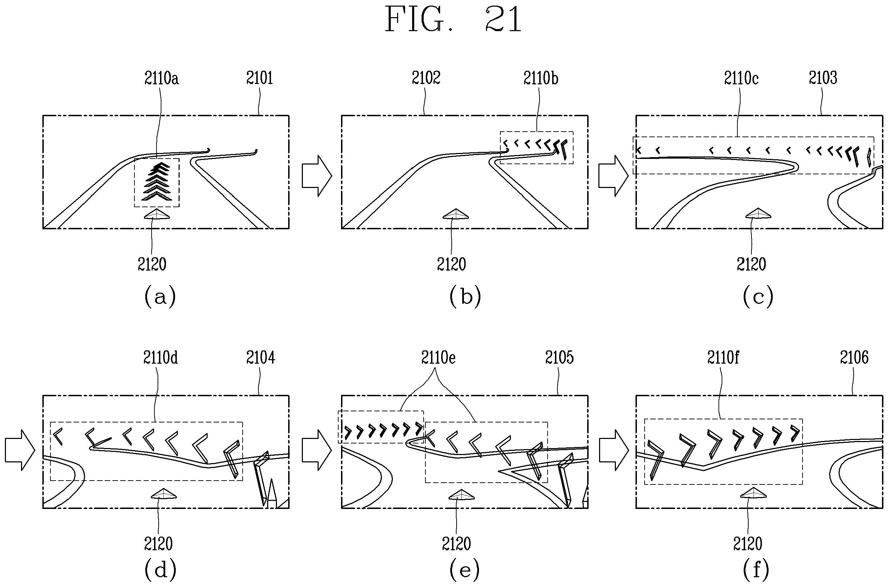

Referring to FIG. 21, the AR display device 800 according to the present disclosure may provide a UX including route guidance information related to a rotary intersection (roundabout) through an AR graphic interface overlaid on a front image of the vehicle. This UX is provided when a rotary intersection is predicted as a next driving situation during the driving of the vehicle.

A rotary intersection is an intersection region of a circular shape designed for traffic control in a heavy traffic area. Since the rotary section includes a plurality of entry points and a plurality of exit points, a more intuitive route guidance UX is required for safe and convenient driving.

The processor 820 may recognize or anticipate the next driving situation of the vehicle, which is indicated by the second AR object, based on information related to the rotary intersection obtained through navigation information and map data (e.g., HD map).

According to an embodiment, when the rotary intersection is recognized or anticipated as the next driving situation of the vehicle based on the map data and the navigation information of the vehicle, the processor 820 may calculate a route corresponding to each exit point of the rotary intersection.

In the case of using map data of an HD map, the route corresponding to each exit point may be calculated based on lane information within the rotary intersection.

When the map data of the HD map cannot be used, the route corresponding to each exit point may be calculated based on entry/exit locations of the rotary intersection and location information regarding each exit. For example, the processor 820 may calculate driving routes within the rotary intersection based on a shape of a circle circumscribing three points (i.e. entry/outlet/exit) within the rotary intersection.

Based on the calculated exit points, the processor 820 may render the AR graphic interface such that the second AR object is divided into plural fragments at a point, which is a predetermined distance ahead of each exit point, namely, at a second location, and update the AR graphic interface to display each route calculated at a third location corresponding to each exit point.

Referring to (a) of FIG. 21, when the vehicle enters within a predetermined distance from an entry location of the rotary intersection, the second AR object 2110a of the AR graphic interface is separated from the first AR object 2120, and overlaid on a front image 2101 in the form of a plurality of fragments.

Next, as illustrated in (b) and (c) of FIG. 21, a guide route along which the second AR object 2110b or 2110c moves in the form of the plurality of fragments to the exit location is rendered to overlap the front image 2102 or 2103.

Subsequently, as illustrated in (d) to (f) of FIG. 21, a group of second AR objects 2110d, 2110e, 2110f (e.g., a plurality of first fragments, a plurality of second fragments) each forming a guide route is rendered to sequentially guide driving toward the final exit of the rotary intersection.

At this time, as illustrated, the second AR object 2110d, 2110e, 2110f ignores (or blocks) exits other than the final exit and a plurality of the guide routes are connected, in order to prevent the vehicle from entering the exits other than the final exit.

Then, when or immediately after the vehicle exits the rotary intersection along the guide route represented by the second AR object 2110d, 2110e, 2110f, the AR graphic interface is displayed such that the second AR object is joined to the first AR object again.

[Proximity to set destination]

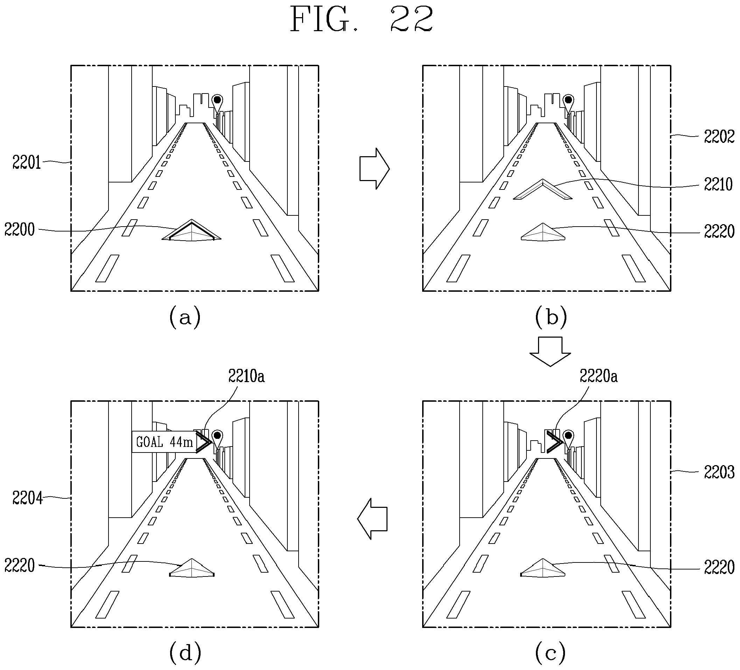

Referring to FIG. 22, the AR display device 800 according to the present disclosure may provide a UX, which includes setting information related to a navigation system, through an AR graphic interface overlaid on a front image of the vehicle while the vehicle travels.

The processor 820 may receive setting information of a navigation system interoperating with the vehicle. The setting information may include destination (goal) information received from the navigation system. Based on the received destination information, the processor 820 may recognize that a current location of the vehicle is within a predetermined distance (second location) from a location (first location) corresponding to the destination information. The processor 820 may render the second AR object to be separated and located to guide an accurate location of the destination.

The processor 820 may receive the destination information from navigation information of the vehicle through the communication module 810. and the processor 820 may update the AR graphic interface such that the second AR object is separated (moved) and points to the first location when the current location of the vehicle reaches a second location, which is a predetermined distance ahead of the first location corresponding to the received destination information.

According to an embodiment, when the separated second AR object moves to the first location, an image may be changed or added to include distance information remaining from the current location of the vehicle (or the first AR object) up to the first location corresponding to the destination information.

Accordingly, the driver can more accurately check the location of the destination. In addition, even after the vehicle actually arrives at the destination, the separated second AR object of the AR graphic interface does not disappear but continues to be displayed while being joined together to the firstAR object. Therefore, there is no embarrassing situation in which the vehicle wanders around the destination due to a sudden end of the guidance when the vehicle arrives at the destination.

Referring to (a) to (c) of FIG. 22, an AR graphic interface 2200 having the first and second AR objects joined together is displayed on a front image 2201 of the vehicle while the vehicle travels toward the destination (goal). Then, when the vehicle approaches a location within a predetermined distance of the destination, the second AR object is separated from the first AR object, and rendered to move toward the location of the destination, which is sequentially updated on front images 2202 and 2203.

Next, as illustrated in (d) of FIG. 22, when or after moving to the location within a predetermined distance of the destination, the separated second AR object 2210 may change into a mark indicating the destination (e.g., a goal pin icon) or change into a shape of a milestone. The separated second AR object 2210 may be updated to include the destination location and a remaining distance.

Meanwhile, when the current location of the vehicle, for example, reaches a first location corresponding to the destination or passes the first location, the processor 820 renders the AR graphic interface such that the first and second AR objects are joined to each other until a new next driving situation of the vehicle is detected.

[U-turn guide rendering]

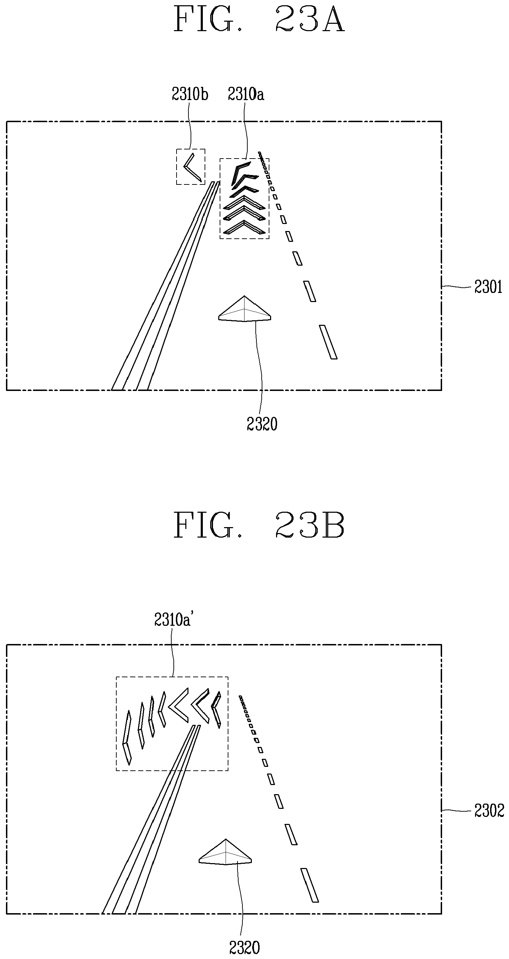

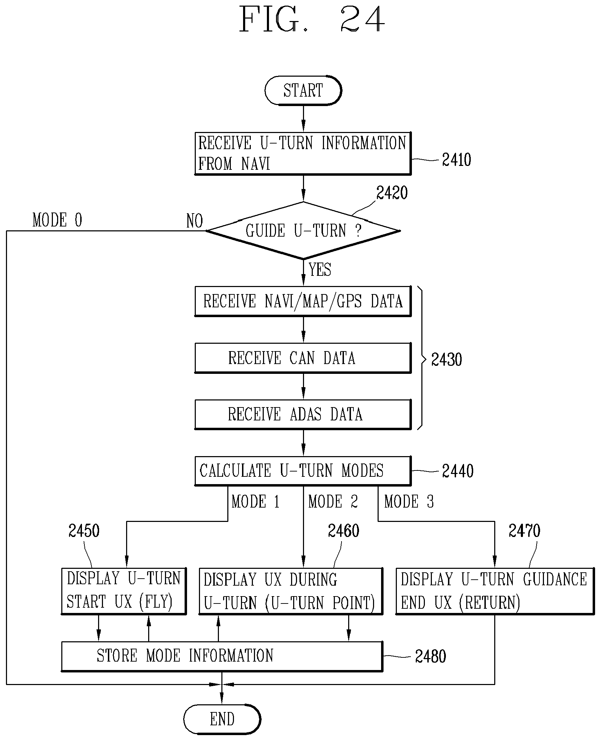

Referring to FIGS. 23A, 23B, and 24, the AR display device 800 according to the present disclosure may provide a U-turn guidance UX more intuitively through an AR graphic interface overlaid on a front image of the vehicle while the vehicle is traveling.

When a U-turn section is recognized or anticipated as a next driving situation of the vehicle based on map data and navigation information of the vehicle, the processor 820 may separate and locate the second AR object of the AR graphic interface at a second position, which is a predetermined distance ahead of a U-turn section entry point, to guide a U-turn location.

At this time, a predetermined distance calculated from the U-turn section entry point, a second location ahead of the predetermined distance, or a point at which the second AR object is separated may vary depending on a situation in a U-turn-available lane (e.g., congestion of vehicles waiting for U-turn, detection of obstacles in an opposite lane, and possibility of collision).

The processor 820 may render the AR graphic object such that the second AR object separated from the first AR object changes according to a driving state of the vehicle in the U-turn section.

Referring to FIG. 23A, when the current location of the vehicle (orthe location of the first AR object) is within a predetermined distance (e.g., 150 to 200 m) from the U-turn section, the second AR object is separated from the first AR object 2320, and a fragment 2310b of the second AR object flies to the exact U-turn location while the remaining fragments 2310a render a guide trajectory along which the vehicle is supposed to travel.

At this time, the flown fragment 2310b overlaps the front image 2301 in the form of a U-turn GUI (e.g., a form in which the fragment 2310b turns in a direction to perform the U-turn), which matches the U-turn location. In addition, the first AR object is changed in real time according to a driving direction and driving speed of the vehicle. To this end, the processor 820 provides an AR GUI frame corresponding to the change in the first and second AR objects to the navigation application so that an AR GUI surface is updated.

Continuously referring to FIG. 23B, after the vehicle enters the U-turn section, the remaining fragments of the second AR object 2310a' sequentially turn in the U-turn direction to indicate the exact U-turn location ahead of the vehicle, so that a guide trajectory is rendered on the front image 2302.

FIG. 24 is a flowchart illustrating a method of providing a U-turn guidance UX by varying an AR graphic interface according to the present disclosure. Each process of the illustrated method is performed by the processor 820, and the processor 820 may cooperate with the navigation engine 910, the AR engine 920, the navigation application 930, and the sensor and map 940.

In the flowchart of FIG. 24, the processor 820 may receive U-turn information as navigation information (2410). The processor 820 determines whether or not a U-turn guidance is required based on a distance between a current location of the vehicle and a U-turn location (2420). For example, while the current location of the vehicle is far away from the U-turn location by a predetermined distance, for example, when the vehicle is more than 200 m away from the U-turn location, the first and second AR objects are rendered in a combined state in which the first and second AR objects are joined to each other.

When it is recognized that the vehicle has entered within a predetermined distance from the U-turn location, the processor 820 receives vehicle navigation information of the vehicle, map data, GPS data, CAN data, and ADAS sensing data (2430), and determines one of U-turn modes based on the received information or data (2440)

The U-turn modes may include a first U-turn mode in which U-turn guidance starts, a second U-turn mode in which the U-turn guidance continues, and a third U-turn mode in which the U-turn guidance ends. The first to third U-turn modes are sequentially performed while the vehicle makes a U-turn.

Specifically, when the vehicle enters a predetermined distance from the exact U-turn location, the first U-turn mode is performed (2450), and the second AR object separated from the first AR object flies to the exact U-turn location while drawing a U-turn trajectory.

Subsequently, while the vehicle is traveling in the U-turn section after the entry, the second U-turn mode is performed (2460). Accordingly, the separated second AR object sequentially makes the U-turn at the U-turn location, and draws a guide trajectory, along which the vehicle is supposed to travel, in real time while maintaining a predetermined distance from the vehicle.

Information related to the first and second U-turn modes is stored as mode information (2480) and is called and used when necessary.

When the vehicle completes the U-turn, for example, when the vehicle makes the U-turn and passes about 50 m over the U-turn location, the third U-turn mode is performed (2470). Accordingly, the AR graphic interface is rendered such that the separated second AR object is moved back to a location near to the first AR object and/or joined to the first AR object.

[GUI panel rendering]

Meanwhile, the processor 820 may determine whether any one of a first condition and a second condition is satisfied based on at least one of map data, a current location, and navigation information of the vehicle. Here, the first condition is a case where a driving situation of the vehicle does not significantly change from a current driving state, and the second condition is a case where a change in the driving situation of the vehicle is predicted or a need for a drive guide is predicted.

When the first condition is satisfied, the processor 820 renders the AR graphic interface in the combined state of the first and second AR objects. On the other hand, when the second condition is satisfied, the processor 820 renders the AR graphic interface in the separated state of the first and second AR objects so that the separated second AR object indicates a predicted next driving situation.

In the first condition, the processor 820 may render a panel region, which includes an AR object associated with driving information of the vehicle (e.g., a vehicle driving speed, a current time, remaining time to a destination, a location of a next driving direction), to overlap a predetermined region on the driving image.

Also, in the second condition, the processor 820 may update the panel region, which includes the AR object associated with the driving information of the vehicle (e.g., the vehicle driving speed, the current time, the remaining time to the destination, the location of the next driving direction), to be hidden or inclined while the separated second AR object shows the next driving situation.

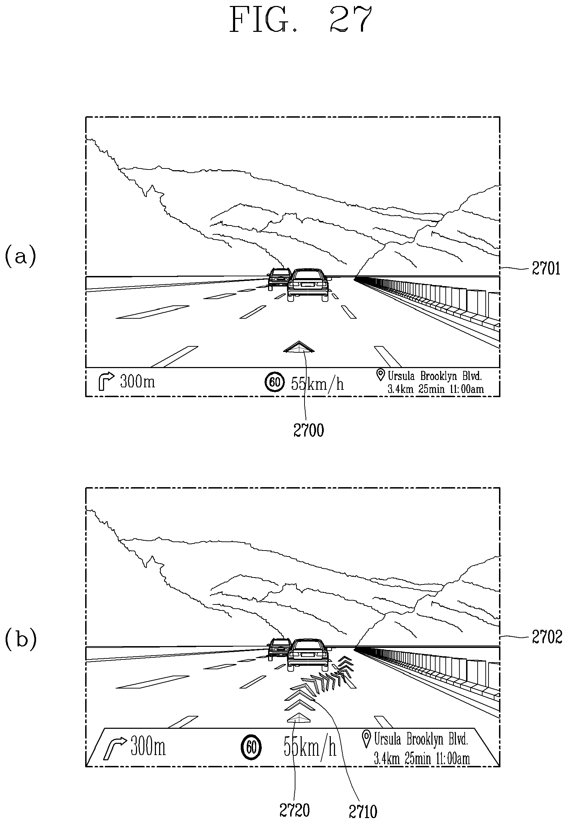

For example, in a front image 2701 of (a) of FIG. 27, an AR graphic interface 2700 is rendered in the combined state while the vehicle is going straight, and a panel region of a navigation screen is displayed in a normal horizontal mode.

Meanwhile, the navigation application 930 may receive information related to the state of the AR graphic interface 2700, for example, joining (combination), separation, and re-joining (recombination), from the processor 820, and determine a display mode of the panel region based on the received information. In this case, various display modes of the panel region may be previously stored in a memory or the like. The navigation application 930 transfers information corresponding to the determined display mode to a navigation GUI surface in real time. Accordingly, the display mode of the panel region of the navigation screen is changed.

For example, when a lane change of the vehicle is predicted (e.g., a right turn signal is turned on), the panel region of the navigation screen is switched to an inclined display mode while the AR graphic interface is rendered in the state that first and second AR objects 2710 and 2720 are separated in the front image 2702 illustrated in (b) of FIG. 27.

In this case, when the display mode of the panel region is switched, an animation motion effect (e.g., horizontal->inclined or inclined->horizontal) may be made so that the mode switching is seamlessly performed.

According to this, other AR features displayed on the navigation screen and the driving guide by the AR graphic interface according to the present disclosure can be displayed more harmoniously. In addition, the AR driving mode is further improved, and driving stability and convenience can be enhanced.

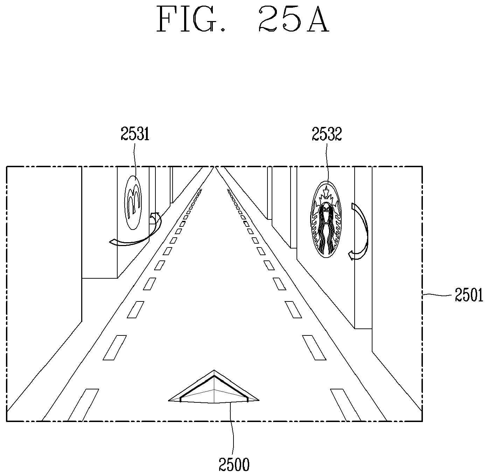

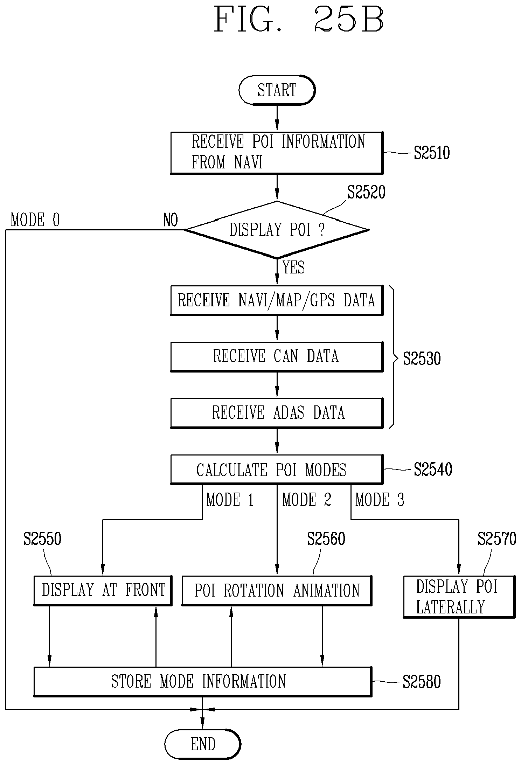

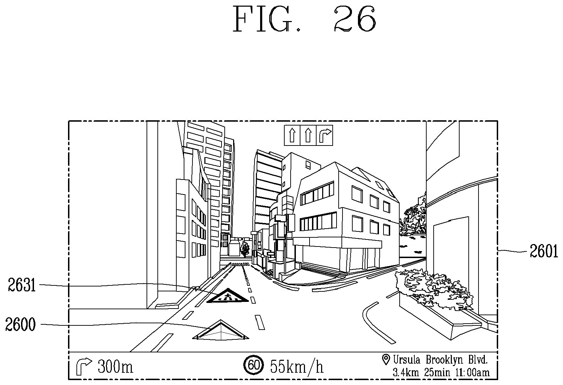

FIGS. 25A, 25B, and 26 are exemplary diagrams related to additionally providing surrounding information through an intuitive AR UX when an AR graphic interface is output on a navigation screen according to an embodiment.

[POI rotation]

Referring to FIG. 25A, while an AR graphic interface 2500 overlaps a front image 2501 of the vehicle, surrounding POIs 2531 and 2532 may be displayed in an AR form. As the vehicle travels close to the displayed POIs 2531, the POIs may rotate to display additional information.

This can more intuitively show surrounding POIs while the vehicle is traveling, resulting in facilitating the driver to perceive the POIs.

In the flowchart of FIG 25B, the processor 820 may receive POI information as navigation information (S2510). The processor 820 determines whether to display POIs based on a current location of the vehicle, navigation information, and map data (S2520).

When it is determined to display the POIs, the processor 820 receives sensing data of the vehicle, for example, vehicle navigation information, map data, GPS data, CAN data, and ADAS sensing data (S2530), and determine one of POI modes based on the received information or data (S2540)

The POI modes may include a first POI mode in which POI is displayed on a front image, a second POI mode in which a rotation animation effect is applied to POI, and a third POI mode in which POI is displayed in a lateral direction. The first to third POI modes are sequentially performed while the vehicle approaches and passes a POI location.

Specifically, when the vehicle enters a predetermined distance from the POI location, the first POI mode is performed (S2550), and a POI icon is displayed on the front image.

Continuously, when the vehicle approaches the displayed POI location, the second POI mode is performed (S2560), and an animation effect of rotating the POI icon is made. At this time, information related to the first and second POI modes is stored as mode information (S2580) and is called and used when necessary. When the vehicle arrives at the POI location, the third POI mode in which the POI icon is displayed in the lateral direction and additional information (e.g., POI name, POI-related advertisement content) is displayed is performed (S2570). Afterwards, when the vehicle passes the POI location, the POI icon disappears from the front image.

[Crosswalk rending]

Referring to FIG. 26, the AR display device 800 according to the present disclosure may provide a UX that includes crosswalk information in an AR form overlapping a front image of the vehicle while the vehicle is traveling.

The processor 820 may acquire crosswalk information from sensing data of the vehicle while the vehicle is traveling, and display an AR crosswalk sign 2631 together with an AR graphic interface 2600 overlaid on a front image 2601 as illustrated in FIG. 26.

At this time, the AR graphic interface 2600 is displayed in a state in which the first and second AR objects are combined, and the AR crosswalk sign 2631 is displayed on a bottom surface of a driving road in the front image 2601. The AR crosswalk sign 2631 may be displayed to overlap the front image when the vehicle arrives at a point which is a predetermined distance apart from an actual location of the crosswalk. When the vehicle travels a predetermined distance over the actual location of the crosswalk, the AR crosswalk sign 2631 disappears and only the AR graphic interface 2600 is displayed.

According to this, the crosswalk information is displayed in the intuitive AR form while the vehicle is traveling, which can help the driver's safe driving.

As described above, according to an AR display device and a method of operating the same according to an embodiment of the present disclosure, an AR navigation screen can be provided based on a front image that is calibrated without separate setting, and a predicted driving situation shown on a current navigation screen can be guided, together with a current location of a vehicle, by using AR objects, thereby providing more intuitive and realistic AR guidance to the vehicle. Also, a current driving state and a next driving situation can be guided at the same time by separation, deformation and combination of one AR graphic interface, and a separated AR object can guide driving while moving along with the vehicle, instead of being displayed at a fixed location, which can allow the vehicle to travel by following the guide more easily, safely, and conveniently. In addition, an AR graphic interface that reflects not only a predicted driving situation but also navigation state information, setting information, and surrounding POI information can be provided, such that a user can experience a more harmonious and expanded AR driving mode.

The present disclosure can be implemented as computer-readable codes (applications or software) in a program-recorded medium. The method of controlling the autonomous vehicle can be realized by a code stored in a memory or the like.

The computer-readable medium may include all types of recording devices each storing data readable by a computer system. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). The computer may include the processor or the controller. Therefore, the detailed description should not be limitedly construed in all of the aspects, and should be understood to be illustrative. The scope of the present disclosure should be determined by rational interpretation of the appended claims, and all changes within the scope of equivalents of the present disclosure are included in the scope of the present disclosure.

**Claims**

1. An augmented reality, AR, display device (800) for a vehicle comprising:

   a communication module (810) configured to receive image data including a front image of the vehicle, location data including a current location of the vehicle, and map data relating to the current location of the vehicle;
   a processor (820) configured to activate a preset application to render an AR graphic interface (1200, 1300, 1400, 1500, 1600, 1700, 2200, 2500, 2700) overlapping the front image, the AR graphic interface including a first AR object (1220, 1420, 1620, 1720, 1920, 2020, 2120, 2320) indicating a current driving state of the vehicle and a second AR object (1210, 1410, 1610, 1710, 1910, 2010, 2110, 2310) indicating a guide for driving based on the current location of the vehicle and the map data; and
   a display (830) configured to display a navigation screen including the front image overlapped by the AR graphic interface (1200, 1300, 1400, 1500, 1600, 1700, 2200, 2500, 2700) according to the rendering,
   wherein the processor (820) is further configured to render the AR graphic interface (1200, 1300, 1400, 1500, 1600, 1700, 2200, 2500, 2700) in the manner of selectively separating the second AR object (1910, 2010, 2110, 2210, 2310, 2710) from the first AR object (1920, 2020, 2120, 2210, 2320, 2720) or joining the second AR object (1410, 1610, 1710) to the first AR object (1420, 1620, 1720) on the navigation screen.

2. The AR display device of claim 1, wherein the processor is further configured to change the AR graphic interface (1200, 1300, 1400, 1500, 1600, 1700, 2200) based on data corresponding to a next driving situation of the vehicle predicted based on the map data and the current location of the vehicle updated.

3. The AR display device of claim 2, wherein the AR graphic interface is changed at a second location that is at a predetermined distance ahead of a first location where the next driving situation of the vehicle starts, or that is a location that the vehicle passes at a predetermined time point prior to reaching the first location.

4. The AR display device of any one of claims 1 to 3, wherein the communication module (810) is further configured to receive navigation information of the vehicle,

   any one of a first condition and a second condition is determined based on at least one of the map data, the current location, and the navigation information of the vehicle, and
   wherein the processor (820) is configured to render the AR graphic interface (1200, 1300, 1400, 1500, 1600) by joining the first and second AR objects to each other on the navigation screen when the first condition is satisfied, and by separating the first and second AR objects from each other on the navigation screen when the second condition is satisfied, the separated second AR object indicating the predicted next driving situation.

5. The AR display device of claim 4, wherein the processor (820) is further configured to: render, under the first condition, a panel region including AR objects associated with driving information of the vehicle to overlap a predetermined region of the front image, and
   update, under the second condition, the panel region to be hidden or inclined while the separated second AR object indicates the next driving situation.

6. The AR display device of any one of claims 1 to 5, wherein the communication module (810) is further configured to receive sensing data of the vehicle,

   the data corresponding to the next driving situation of the vehicle includes road shape information that is predicted based on at least one of the map data and sensing data of the vehicle and the current location of the vehicle, and
   wherein the processor (820) is configured to update the AR graphic interface (1300, 1400, 1500) to reflect a change of the road shape information.

7. The AR display device of claim 6, wherein the AR graphic interface (1300, 1400) is rendered to rotate in a first direction based on a vehicle wheel angle corresponding to the road shape information, and
   wherein the processor (820) is configured to update the AR graphic interface (1300, 1400) in a manner that a degree of distortion or a difference of rotation angles between first and second AR objects increases as the vehicle wheel angle increases.

8. The AR display device of claim 6 or 7, wherein the AR graphic interface (1500, 1600) is rendered to rotate in a second direction based on a slope angle corresponding to the road shape information, and
   wherein the processor (820) is configured to change the AR graphic interface (1500, 1600) in a manner that a direction and degree of a rotation angle of the second AR object (1610) is changed relative to the first AR object (1620) according to a direction and degree of the slope angle.

9. The AR display device of any one of claims 1 to 8, wherein the processor (820) is configured to:

   render the second AR object (1710) to be separated from the first AR object (1720) and rotated relative to the first AR object (1720) while the first AR object (1720) shows the current driving state of the vehicle, in response to recognition of a route search state of the vehicle as the next driving situation of the vehicle, and
   update the AR graphic interface (1700) in a manner that the separated first and second AR objects (1720, 1710) are joined together, in response to an end of the route search state of the vehicle.

10. The AR display device of claim 1, wherein the communication module (810) is further configured to receive sensing data and navigation information of the vehicle,
    and the processor (820) is configured to change the AR graphic interface to include a notification of a driving warning situation of the vehicle in which a problem associated with the driving of the vehicle is recognized or anticipated, wherein the driving warning situation is recognized or anticipated based on the sensing data and navigation information of the vehicle.

11. The AR display device of claim 10, wherein the processor (820) is configured to change at least one of color, shape, blinking, and highlighting of the AR graphic interface when speeding of the vehicle is recognized or anticipated as the driving warning situation.

12. The AR display device of claim 3, wherein the communication module (810) is further configured to receive sensing data of the vehicle, and
when turning is determined as the next driving situation of the vehicle based on the map data and the current location of the vehicle, preferably further based on the sensing data of the vehicle, the processor is configured to update the AR graphic interface such that the second AR object (1910) is separated to indicate at least one of direction and route of the turning at the second location while the first AR object (1920) indicates a current driving direction of the vehicle.

13. The AR display device of claim 12, wherein the processor (820) is configured to:

keep displaying the second AR object (1910, 2010) separated from the first AR object to guide a next route for the vehicle to travel, in response to the current location of the vehicle approaching the second location within a predetermined distance, and
update the AR graphic interface by joining the first and second AR objects together, in response to the current location of the vehicle passing the second location.

14. The AR display device of any one of claims 1 to 9, wherein the processor (820) is configured to:

receive destination information from navigation information of the vehicle through the communication module (810), and
update the AR graphic interface (2200) such that the second AR object (2210) is separated and points to the first location, when the current location of the vehicle reaches the second location.

15. A method of presenting an augmented reality, AR, interface on an AR display device for a vehicle, comprising:

receiving image data including a front image of the vehicle;
receiving location data including a current location of the vehicle;
receiving map data relating to the current location of the vehicle;
activating a preset application to render an AR graphic interface to overlap the front image, the AR graphic interface including a first AR object indicating a current driving state of the vehicle and a second AR object indicating a guide for driving at least on the basis of the current location of the vehicle and the map data; and
generating signals for displaying a navigation screen including the front image overlapped by the AR graphic interface according to the rendering,
wherein the rendering of the AR graphic interface comprises selectively separating the second AR object from the first AR object or joining the second AR object to the first AR object on the navigation screen.

# FIG. 1

# FIG. 2

# FIG. 3

# FIG. 4

# FIG. 5

OB15

OB14

OB13

OB12

OB11

100

OB10

# FIG. 6

# FIG. 7

**200** USER INTERFACE APPARATUS

**210** INPUT UNIT
**211** VOICE INPUT MODULE
**212** GESTURE INPUT MODULE
**213** TOUCH INPUT MODULE
**214** MECHANICAL INPUT MODULE

**220** INTERNAL CAMERA
**230** BIOMETRIC SENSING UNIT

**250** OUTPUT UNIT
**251** DISPLAY MODULE
**252** AUDIO OUTPUT MODULE
**253** HAPTIC OUTPUT MODULE

**270** PROCESSOR

**300** OBJECT DETECTING APPARATUS
**310** CAMERA
**320** RADAR
**330** LIDAR
**340** ULTRASONIC SENSOR
**350** INFRARED SENSOR
**370** PROCESSOR

**400** COMMUNICATION DEVICE
**410** SHORT-RANGE COMMUNICATION UNIT
**420** LOCATION INFORMATION UNIT
**430** V2X COMMUNICATION UNIT
**440** OPTICAL COMMUNICATION UNIT
**450** BROADCAST TRANSCEIVER
**470** PROCESSOR

**500** OPERATION CONTROL APPARATUS
**510** STEERING INPUT DEVICE
**530** ACCELERATION INPUT DEVICE
**570** BRAKE INPUT DEVICE

**170** CONTROLLER

**100**

**600** VEHICLE OPERATING APPARATUS
**610** POWER TRAIN OPERATING UNIT
**611** POWER SOURCE OPERATING PORTION
**612** GEARBOX OPERATING PORTION

**620** CHASSIS OPERATING UNIT
**621** STEERING OPERATING PORTION
**622** BRAKE OPERATING PORTION
**623** SUSPENSION OPERATING PORTION

**630** DOOR/WINDOW OPERATING UNIT
**631** DOOR OPERATING PORTION
**632** WINDOW OPERATING PORTION

**640** SAFETY APPARATUS OPERATING UNIT
**641** AIRBAG OPERATING PORTION
**642** SEATBELT OPERATING PORTION
**643** PEDESTRIAN PROTECTING APPARATUS OPERATING PORTION

**650** LAMP OPERATING UNIT
**660** AIR CONDITIONER OPERATING UNIT

**700** OPERATION SYSTEM
**710** DRIVING SYSTEM
**740** PARKING EXIT SYSTEM
**750** PARKING SYSTEM

**770** NAVIGATION SYSTEM
**120** SENSING UNIT
**130** INTERFACE UNIT
**140** MEMORY
**190** POWER SUPPLY UNIT

**800** AR DISPLAY APPARATUS
**810** COMMUNICATION MODULE
**820** PROCESSOR
**830** DISPLAY

# FIG. 8

# FIG. 9

AR NAVIGATION SCREEN

900

904

NAVIGATION GUI SURFACE

AR GUI SURFACE — 903

AR CAMERA SURFACE — 902

NAVIGATION MAP SURFACE

901

EP 4 290 187 A2

FIG. 10

NAVIGATION SCREEN

NAVIGATION GUI SURFACE — 904

AR GUI SURFACE — 903

AR CAMERA SURFACE — 902

NAVIGATION MAP SURFACE — 901

AR ENGINE — 920

AR ADAPTOR — 921

CAMERA SERVER — 1001

RAW DATA

PREVIEW DATA

900

62
60
500m

CC TV

300m
1.3km

300m

am 11:23    123.4km    10,000WON

# FIG. 11

| ACTIVATE APPLICATION | S10 |

RENDER AR GRAPHIC INTERFACE, INCLUDING FIRST AR OBJECT DISPLAYING DRIVING STATE OF VEHICLE AND SECOND AR OBJECT DISPLAYING GUIDE FOR DRIVING SITUATION OF VEHICLE, TO OVERLAP FRONT IMAGE OF VEHICLE, ON THE BASIS OF MAP DATA — S20

DISPLAY NAVIGATION SCREEN INCLUDING FRONT IMAGE OVERLAPPED BY AR GRAPHIC INTERFACE — S30

1100

# FIG. 12A

1200

# FIG. 12B

1210

1220

# FIG. 13A

1301

1300a

# FIG. 13B

1302

1300b

# FIG. 14A

# FIG. 14B

# FIG. 14C

```
                          ( START )

S1410 ─┐ ACQUIRE LANE INFORMATION        DISPLAY GO-STRAIGHT UX ─ S1430
       │ FROM ADAS

       S1420─┐
                  ◇ GO STRAIGHT ?  ──YES──→

                         │ NO

S1440 ─┐ CALCULATE ROTATIONAL ANGLE
       │ ACCORDING TO WHEEL ANGLE

S1450 ─┐ DISPLAY CURVE UX
```

# FIG. 15A

1501

1500a

# FIG. 15B

1502

1500b

# FIG. 16A

1600

# FIG. 16B

1610

1620

# FIG. 16C

1620

1610

# FIG. 16D

START

S1610 — ACQUIRE SLOPE INFORMATION

DISPLAY HORIZONTAL ROAD UX — S1630

S1620 — NO SLOPE ?

YES

NO

S1640 — CALCULATE ROTATIONAL ANGLE ACCORDING TO SLOPE VALUE

S1650 — DISPLAY SLOPE UX

# FIG. 17A

1701

1720  1710

# FIG. 17B

START

S1710 — ACQUIRE NAVIGATION STATE INFORMATION

DISPLAY COMBINATION UX — S1730

S1720 — ROUTE (RE) SEARCH ?

NO

YES

S1740 — DISPLAY ROUTE (RE) SEARCH UX

# FIG. 17C

1720    1710

# FIG. 18

```
                        ┌─────────────┐
                        │    START    │
                        └──────┬──────┘
                               ↓  ↑
   ┌─────────────────────────────┼────────────────────────────────────┐
   │                             ↓                                      │
S1810 ──┌──────────────────────────────────┐   ┌───────────────────┐
        │ ACQUIRE DRIVING SPEED AND         │   │ DISPLAY UX IN     │── S1830
        │ SPEED LIMIT INFORMATION           │   │ BASIC COLOR       │
        └──────────────────┬───────────────┘   └───────────────────┘
                           ↓                              ↑
      S1820 ╱╲                                            │
          ╱      ╲                          NO            │
        ╱  SPEEDING ?  ╲ ────────────────────────────────┘
          ╲          ╱
            ╲      ╱
               ╲╱
                │ YES
                ↓
     ┌──────────────────────────────┐
S1840│ DISPLAY UX IN SPEEDING       │
     │ WARNING COLOR                │
     └──────────────────────────────┘
```

# FIG. 19A

# FIG. 19B

FIG. 20

EP 4 290 187 A2

FIG. 21

# FIG. 22

(a)

(b)

(c)

(d)

EP 4 290 187 A2

# FIG. 23A

2310b  2310a

2301

2320

# FIG. 23B

2310a'

2302

2320

# FIG. 24

# FIG. 25A

# FIG. 25B

START

RECEIVE POI INFORMATION FROM NAVI ——— S2510

S2520

MODE 0 ←—— NO ——— DISPLAY POI ?

YES

RECEIVE NAVI/MAP/GPS DATA

RECEIVE CAN DATA ⎬ S2530

RECEIVE ADAS DATA

CALCULATE POI MODES ——— S2540

MODE 1 | MODE 2 | MODE 3

S2550 | S2560 | S2570

DISPLAY AT FRONT | POI ROTATION ANIMATION | DISPLAY POI LATERALLY

STORE MODE INFORMATION ——— S2580

END

# FIG. 26

2631

2600

2601

300m    60 55km/h    Ursula Brooklyn Blvd.
                      3.4km 25min 11:00am

# FIG. 27

(a)

2701

⌐⟶ 300m      (60) 55km/h     ◉ Ursula Brooklyn Blvd.
3.4km 25min 11:00am

2700

(b)

2702

⌐⟶ 300m      (60)   55km/h     ◉ Ursula Brooklyn Blvd.
3.4km 25min 11:00am

2720     2710